# EUROPEAN PATENT APPLICATION

(11) **EP 2 717 562 A2**
(43) Date of publication of application: **09.04.2014**
(21) Application number: 13187426.5
(22) Date of filing: 04.10.2013
(51) Int. Cl.: H04N 5/765, H04N 5/85, H04N 21/426, H04N 21/43, H04N 21/432, H04N 21/658, H04N 21/81, H04N 21/442, H04N 21/6379

(54) **Apparatus for reproducing recording medium and method thereof**

(30) Priority: 04.10.2012 US 201261709413 P; 04.03.2013 KR 20130022954
(71) Applicant: Samsung Electronics Co., Ltd, Gyeonggi-do 443-742 (KR)
(72) Inventor: Park, Hong-seok, Gyeonggi-do (KR); Kim, Min-seok, Gyeonggi-do (KR); Bak, Bong-gil, Gyeonggi-do (KR); Yang, Jong-ho, Gyeonggi-do (KR); Lee, Jae-jun, Gyeonggi-do (KR); Jang, Yong-seok, Gyeonggi-do (KR)
(74) Representative: Davies, Robert Ean

(57) **Abstract**

An apparatus for reproducing a recording medium is disclosed. The apparatus may include a driver configured to load a recording medium containing first data, a communicator configured to receive second data by performing network adaptive communication with a server apparatus, a data storage configured to store the second data, a memory configured to store a manifest file for data binding, a controller configured to update a data package of the first data to a virtual data package, using the manifest file, a processor configured to connect the first data and second data and reproduce the connected first data and second data using the virtual data package, and an interface configured to output the reproduced first and second data to an external apparatus.

## Description

### CROSS-REFERENCE TO RELATED APPLICATIONS

This application claims priority from U.S. Provisional Patent Application No. 61/709,413, filed in the United States Patent and Trademark Office on October 4, 2012 and Korean Patent Application No. 10-2013-0022954, filed in the Korean Intellectual Property Office on March 4, 2013, the disclosures of which are incorporated herein by reference in their entireties.

### BACKGROUND

### Field

Methods and apparatuses consistent with the exemplary embodiments relate to an apparatus for reproducing a recording medium and a reproducing method thereof, and more particularly to an apparatus for reproducing a recording medium which reproduces content using data recorded in a recording medium and data provided from a server apparatus and a reproducing method thereof.

### Description of Related Art

As the development of electronic technology continues, various types of electronic apparatuses, such as display apparatuses, are being developed and provided. The display apparatuses are being developed such that they have display functions that are being increasingly used. Also, more interest is being paid to content which may be provided on the display apparatuses.

For example, in the past, users were satisfied by the provided services that reproduced simple 2D content. However, recently users tend to want to see 3D content or high resolution content etc. through their display apparatuses.

This content may be recorded in record media such as a CD, DVD, Blu-ray disc and may be provided to users. However, the data capacity of what may be recorded in such a recording medium is limited. Therefore, it was difficult to reproduce big size content using one recording medium

In addition, due to its characteristics, it is difficult to modify a recording medium once it is sold. For example, when a recording medium containing recorded movie content is put on the market, there is no way to modify the existing recording medium which has already been put on the market even if one wants to modify a part of the subtitle or scene. Further, information such as subtitles and menus etc., are usually produced in a hurry to meet the publishing schedule of the recording medium, which may cause issues in the quality and perfection of the content.

### SUMMARY

One or more exemplary embodiments may provide an apparatus for reproducing a recording medium which uses data recorded in the recording medium and data provided from the server apparatus to provide services, and a reproducing method thereof.

According to an aspect of an exemplary embodiment, there is provided an apparatus for reproducing a recording medium, the apparatus including a driver configured to load a recording medium containing first data, a communicator configured to receive second data by performing network adaptive communication with a server apparatus, a data storage configured to store the second data, a memory configured to store a manifest file for data binding, a controller configured to update a data package of the first data to a virtual data package, using the manifest file, a processor configured to connect the first data and second data and reproduce the connected first data and second data using the virtual data package, and an interface configured to output the reproduced first and second data to an external apparatus.

The controller may be further configured to check an initial network bandwidth, select an asset item corresponding to the initial network bandwidth from among multi-configured asset items in the manifest file, and update the virtual data package based on database connection information recorded in the selected asset item.

The controller may be further configured to check a network bandwidth in real time, download the second data according to information corresponding to the checked network bandwidth from among the multi-configured information in the manifest file, and connect the downloaded second data with the first data using the virtual data package and reproduces the result.

The controller may be further configured to check a network bandwidth in real time, and update the virtual data package according to the network bandwidth.

The controller may be further configured to select an asset item corresponding to the checked network bandwidth from among the multi-configured asset items in the manifest file, and update the virtual data package in real time, based on database connection information recorded in the selected asset item.

The first data may include a left eye image and a right eye image. The second data may include at least one of a depth map and a disparity map. The data processor may use the second data and the first data to generate a multi-view image, and the interface may transmit the generated multi-view image to the external apparatus.

The first data includes main image data, the second data may include sub image data, and the data processor may use the main image data and sub image data to express at least one sub image in a main image.

The first data may include image data, the second data may include object identification information for defining an object position and object additional information interlocked to the object position, and the data processor may use the image data, object identification information, and object additional information to express a user interaction object in an image.

According to an aspect of another exemplary embodiment, there is provided a method for reproducing a recording medium, the method including detecting first data recorded on a recording medium, receiving second data by performing network adaptive communication with a server apparatus, updating a data package of the first data to a virtual data package using a manifest file for data binding, connecting the first data and second data and reproducing the connected first data and second data using the virtual data package, and outputting the reproduced first and second data to an external apparatus.

The updating may include detecting an initial network bandwidth, selecting an asset item corresponding to the initial network bandwidth from among asset items multi-configured in the manifest file, and updating the data package into the virtual data package based on database connection information recorded in the selected asset item.

The network adaptive communication may include detecting a network bandwidth in real time, and downloading the second data according to information corresponding to the detected network bandwidth from among the multi-configured information in the manifest file.

The method may further include detecting a network bandwidth in real time, and updating the virtual data package according to the detected network bandwidth.

The method may include detecting a network bandwidth in real time, selecting an asset item corresponding to the detected network bandwidth, from among the multi-configured asset items in the manifest file, and updating the virtual data package in real time based on database connection information recorded in the selected asset item.

The first data may include a left eye image and a right eye image. The second data may include at least one of a depth map and a disparity map, and the reproducing may further include using the second data, and the left eye image and the right eye image to generate a multi-view image.

The first data may include main image data, wherein the second data includes sub image data, and the reproducing may further include using the main image data and the sub image data to add at least one sub image to the main image.

The first data may include image data, the second data may include at least one of object identification information and object additional information for configuring a user interaction object, and the reproducing may further include using the image data, object identification information, and object additional information to display the user interaction object on the image.

According to the present invention there is provided an apparatus and method as set forth in the appended claims. Other features of the invention will be apparent from the dependent claims, and the description which follows.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a view for explaining operations of a recording medium reproducing apparatus according to an exemplary embodiment;
FIG. 2 is a flowchart for explaining a content producing method of a recording medium reproducing apparatus according to an exemplary embodiment;
FIG. 3 is a view for explaining network adaptive communication according to an exemplary embodiment;
FIG. 4 is a block diagram illustrating a configuration of a recording medium reproducing apparatus according to an exemplary embodiment;
FIG. 5 is a view for explaining a method for creating a virtual data package according to an exemplary embodiment;
FIG. 6 is a view for explaining a first example which performs network adaptive communication according to an exemplary embodiment;
FIG. 7 is a view illustrating a first example of a configuration of a manifest file according to an exemplary embodiment;
FIG. 8 is a flowchart for explaining a first example of a communication method according to an exemplary embodiment;
FIG. 9 is a view for explaining a second example for performing network adaptive communication according to an exemplary embodiment;
FIG. 10 is a view illustrating a second example of a configuration of a manifest file according to an exemplary embodiment;
FIG. 11 is a flowchart for explaining a second example of a communication method according to an exemplary embodiment;
FIGs. 12A and 12B are views illustrating an example of a file including a multi-configured list inside a clip information which may be differentiated according to bit rate according to an exemplary embodiment;
FIG. 13 is a view for explaining a method of displaying a bit rate explicitly on an A stream according to an exemplary embodiment;
FIG. 14 is a view illustrating an example of a real time download item according to real time network situations according to an exemplary embodiment;
FIG. 15 is a view for illustrating a third example performing network adaptive communication according to an exemplary embodiment;
FIG. 16 is a view for explaining a method of generating a stereo image using a depth map according to an exemplary embodiment;
FIG. 17 is a view for explaining a method of generating a multiview image using a depth map according to an exemplary embodiment;
FIG. 18 is a view illustrating a case of configuring a depth map stream using a sub path according to an exemplary embodiment;
FIG. 19 is a view illustrating a system of configuring a multi-view image and transmitting the configured multi-view image to the display apparatus according to an exemplary embodiment;
FIG. 20 is a view illustrating an example of a multi-view frame configured by combining a plurality of images according to an exemplary embodiment;
FIG. 21 is a view illustrating a system of generating a multi-view image in a display apparatus according to an exemplary embodiment;
FIG. 22 is a view for explaining a method of generating a multi-view image according to an exemplary embodiment;
FIGs. 23 through 26 are views illustrating various examples providing a PIP screen in a recording medium reproducing apparatus according to one or more exemplary embodiments;
FIGs. 27 and 28 are views illustrating various examples of an alpha plane according to one or more exemplary embodiments;
FIGs. 29 and 30 are views illustrating a configuration of a data base for providing an alpha plane according to one or more exemplary embodiments;
FIGs. 31 through 34 are views for illustrating various utilization methods of an alpha plane according to one or more exemplary embodiments;
FIGs. 35 through 37 are views for illustrating various configuration examples of a data processor according to one or more exemplary embodiments;
FIG. 38 is a view for explaining a method of providing a user interactive object in a recording medium reproducing apparatus according to another exemplary embodiment;
FIG. 39 is a view illustrating an example of a depth map including a plurality of depth object areas according to an exemplary embodiment;
FIGs. 40 and 41 are views illustrating various examples of a meta data configuration including object identification information and object additional information interlocked with a depth map according to one or more exemplary embodiments;
FIG. 42 is a view illustrating a configuration of a depth map including object information of watermark format according to an exemplary embodiment;
FIGs. 43 through 45 are views illustrating various examples of a stream configuration for providing object identification information and object additional information according to one or more exemplary embodiments;
FIG. 46 is a view for explaining a method of synchronizing a video frame and an object and displaying the same according to an exemplary embodiment; and
FIGs. 47 and 48 are views illustrating various configuration examples of a system providing a user interaction service using a mobile device according to an exemplary embodiment.

### DETAILED DESCRIPTION

The following detailed description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art. The progression of processing steps and/or operations described is an example; however, the sequence of and/or operations is not limited to that set forth herein and may be changed as is known in the art, with the exception of steps and/or operations necessarily occurring in a particular order. In addition, respective descriptions of well-known functions and constructions may be omitted for increased clarity and conciseness.

Additionally, exemplary embodiments will now be described more fully hereinafter with reference to the accompanying drawings. The exemplary embodiments may, however, be embodied in many different forms and should not be construed as being limited to the embodiments set forth herein. These embodiments are provided so that this disclosure will be thorough and complete and will fully convey the exemplary embodiments to those of ordinary skill in the art. The scope is defined not by the detailed description but by the appended claims. Like numerals denote like elements throughout

Although the terms used herein are generic terms which are currently widely used and are selected by taking into consideration functions thereof, the meanings of the terms may vary according to the intentions of persons skilled in the art, legal precedents, or the emergence of new technologies. Furthermore, some specific terms may be randomly selected by the applicant, in which case the meanings of the terms may be specifically defined in the description of the exemplary embodiment. Thus, the terms should be defined not by simple appellations thereof but based on the meanings thereof and the context of the description of the exemplary embodiment. As used herein, expressions such as "at least one of," when preceding a list of elements, modify the entire list of elements and do not modify the individual elements of the list.

It will be understood that when the terms "includes," "comprises," "including," and/or "comprising," when used in this specification, specify the presence of stated elements and/or components, but do not preclude the presence or addition of one or more elements and/or components thereof. As used herein, the term "module" refers to a unit that can perform at least one function or operation and may be implemented utilizing any form of hardware, software, or a combination thereof.

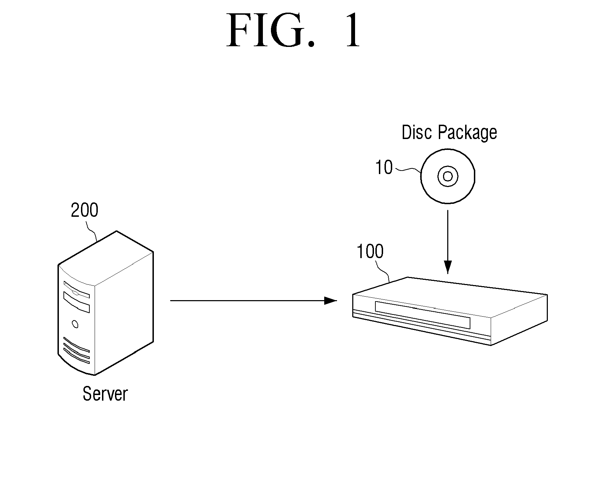

FIG. 1 is a view for explaining operations of a recording medium reproducing apparatus according to an exemplary embodiment of the present disclosure. A recording medium reproducing apparatus 100 refers to an apparatus which detects data recorded in a recording medium and reproduces the detected data,

The recording medium 10 may be one of various types of media such as a Blu-ray disc, holographic disc, DVD, CD, USB memory stick, and external hard etc. The recording medium reproducing apparatus 100 may be embodied as one independent apparatus as illustrated in FIG. 1, but is not limited thereto. For example, the recording medium reproducing apparatus 100 may be embodied as being mounted onto a display apparatus such as a TV etc. For convenience of explanation, the exemplary embodiments herein below are explained based on an example where the recording medium reproducing apparatus 100 is an apparatus which reproduces a Blu-ray disc and provides the reproduced data to a display apparatus.

According to FIG. 1, when the recording medium 10 is mounted onto the recording medium reproducing apparatus 100, the recording medium reproducing apparatus 100 loads the recording medium 10 and detects the data. In addition, the recording medium reproducing apparatus 100 accesses the server apparatus 200 and receives data corresponding to the recording medium 10. The data detected from the recording medium 10 may be called by various names such as the disc package, and main content etc., but for convenience of explanation the recording medium 10 may also be called first data. In addition, the data received from the server apparatus 200 may be called by various names such as the binding unit, binding data, sub content, and additional content etc., but for convenience of explanation it may also be called second data. The expressions, first and second simply mean that the source of each data is different, not that each data is a different data from each other.

The recording medium apparatus 100 updates the data package of the first data as a virtual data package. The virtual data package means a virtual file system for combining the first data and the second data and for reproducing content. The recording medium reproducing apparatus 100 may connect the first and second data and reproduce the first and second data, based on the virtual data package. Consequently, it becomes possible to reproduce content consisting of the first and second data.

Each of the first data and second data may consist of various content. For example, the first data may include 2D image data or 3D image data, and the second data may include a depth map or a disparity map. Alternatively, the first data may include main image data, and the second data may include additional image data etc. Further, the first data may be image data, and the second data may be a menu which may be added to the image data or data regarding other objects.

Accordingly, the first and second data may be embodied as various types. As such, the recording medium reproducing apparatus 100 may handle and reproduce various types of content as one package. Particularly, the second data may be provided from the server apparatus through the network, and thus it may be possible to provide a reproducing service regardless of the content size. Herein are explanations for various exemplary embodiments related to operations and configuration of the recording medium reproducing apparatus 100.

### <Exemplary embodiment using network adaptive communication>

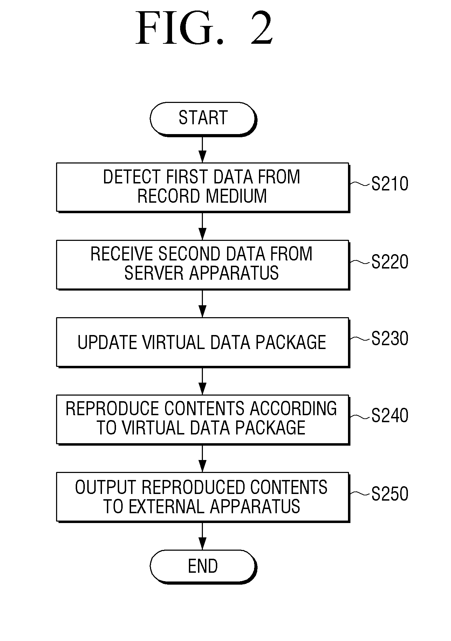

FIG. 2 is a flowchart for explaining a recording medium reproducing method according to an exemplary embodiment of the present disclosure. According to FIG. 2, the recording medium reproducing apparatus detects first data from the recording medium (S210), and receives second data from the server apparatus (S220). In FIG. 2, it is illustrated that the first data detecting stage is performed in advance, but the order of each step may be changed depending on situations, or the steps may be performed at the same time.

The recording medium reproducing apparatus may update the data package of the first data as the virtual data package (S230). The recording medium reproducing apparatus may perform a virtual data package update based on a manifest file for data binding.

The recording medium reproducing apparatus connects the first and second data according to the updated virtual data package, and reproduces the content (S240). The recording medium reproducing apparatus outputs the reproduced content to an external apparatus (S250). In each operation of FIG. 2, the communication with the server apparatus may be performed in an adaptive method to the network state.

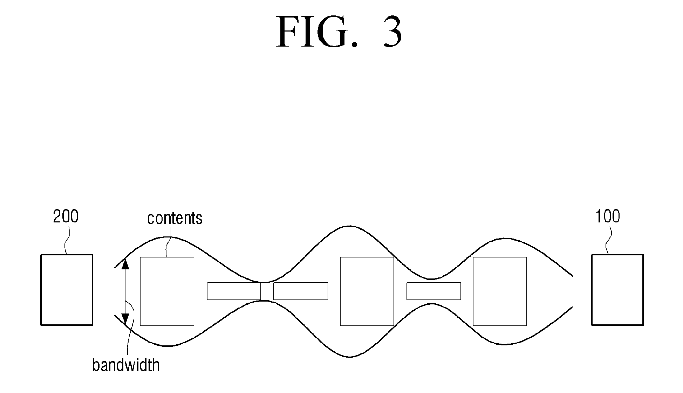

FIG. 3 is a view for explaining an example of a network adaptive communication. The recording medium reproducing apparatus 100 may adjust the bit rate of the content received according to the state of communication with the server apparatus 200. FIG. 3 illustrates a state of adaptively adjusting the bit rate of the content according to the network bandwidth. That is, when the network bandwidth increases, content is downloaded at a relatively high bit rate, whereas when the network bandwidth decreases, content is downloaded at a relatively low bit rate. Accordingly, it is possible to guarantee stability of the content provided through the network.

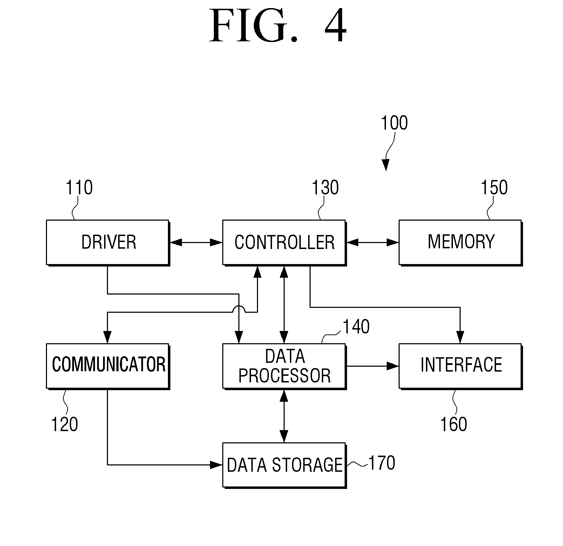

FIG. 4 is a block diagram illustrating an example of a configuration of a recording medium reproducing apparatus which reproduces a recording medium as set out in the method shown in FIG. 2. As aforementioned, the recording medium reproducing apparatus 100 receives a part of data used in content reproducing through the network. However, because the state of the network is not always stable, it may be difficult to guarantee the stability of the content provided through the network. Accordingly, in the present exemplary embodiment, there is provided a recording medium reproducing apparatus which may perform a network adaptive communication and reproduce the content with stability.

According to FIG. 4, the recording medium reproducing apparatus 100 includes a driver 110, communicator 120, controller 130, data processor 140, memory 150, an interface 160, and data storage 170.

When the recording medium 10 is mounted thereon, the driver 110 drives the recording medium 10 and detects the data. In a case where the recording medium reproducing apparatus 100 is embodied as an apparatus for reproducing an optical disc such as a Blu-ray disc, the driver 110 may include a tray for putting up an optical disc, a motor for rotating the optical disc, a connector connected to a main board and transmits or receives various data, a power connector for receiving power from a power supply, an optical pickup unit for emitting laser and recording a signal on the optical disc or reading a reflected signal, an object lens, a DSP (Digital Signal Processor) for controlling the overall functions of the driver 110 and for operating the driver 110, and an FEP (Front End Processor) for interpreting a received signal etc. First data detected in the driver 110 may be provided to the data processor 140 or stored in the data storage 170.

The communicator 120 is a configuration for receiving second data from the server apparatus 200. According to the present exemplary embodiment, the communicator 120 may perform a network adaptive communication with the server apparatus 200 and receive second data. The network adaptive communication refers to a communication method which reflects a state of the network and downloads data adaptively. The communicator 120 may access the server apparatus 200 using Wi-Fi, IEEE, Bluetooth, and LAN etc. The server apparatus 200 may be a server apparatus operated by a producer of content, a producer of a content processor, a producer of a display apparatus, or a broadcasting station etc. Second data received by the communicator 120 may be stored in the data storage 170.

The controller 130 combines the first data detected in the driver 110 and the second received from the communicator 120 and stored in the data storage 170 to generate a virtual data package. In order to generate the virtual data package, the controller 130 may use a manifest file.

A manifest file is a file that provides information for data binding. A manifest file may also be called a BUMF (Binding Unit Manifest File). In a manifest file, a Files and titles relation list, name mapping information, progressive playlist information, credential information, Delete Description information, and Delete List information may be stored. Among these, the name mapping information refers to information regarding the connection information between the first data and second data for configuring a virtual data package. The progressive playlist information is information for providing an AV stream list for downloading in real time and reproducing after generating or updating a virtual data package. Such connection information or AV stream list may be organized and stated in assets items in the manifest file.

Such a manifest file may be recorded in the memory 150 and be provided to the controller 130. The manifest file may be reproduced from the recording medium and be recorded in the memory 150, or may be received from the server apparatus 200 or another external source and be recorded in the memory 150. In the memory 150, other various programs or data may be recorded. The memory 150 may include a ROM and/or RAM etc.

The controller 130 uses the manifest file to control the communicator 120 to perform a network adaptive communication, and when the second data is received by communication, the controller 130 stores the received second data in the data storage 170. The data storage 170 is a configurative element for storing the second data.

The controller 130 combines the first data and the second data, and generates a virtual data package as aforementioned.

The data processor 140 reproduces the content based on the virtual data package. More specifically, the data processor 140 processes the first data detected by the driver 110 and generates a video frame. The data processor 140 may include a multiplexer for detecting video data, audio data, and additional data etc. from high-resolution content; a decoder for decoding video data; audio decoder for decoding audio data; filterer for filtering noise; signal amplifier for audio signal amplification; data decoder for additional data processing; renderer for generating an object according to the decoded additional data; and mixer etc. In a case of the Blu-ray disc, image data compressed by a codec of a standard of MPEG-2 or H.264/MPEG-4 AVC, or VC-1 may be stored. The data processor 140 may use this codec to decode image data from among the first data detected in the driver 110 and the second data stored in the data storage 170 and generate a video frame.

The interface 160 provides reproduced content to the external apparatus. For example, the interface 160 may be embodied as an HDMI (High Definition Multimedia Interface), and the external apparatus may be a TV, monitor, or another display apparatus having a display means.

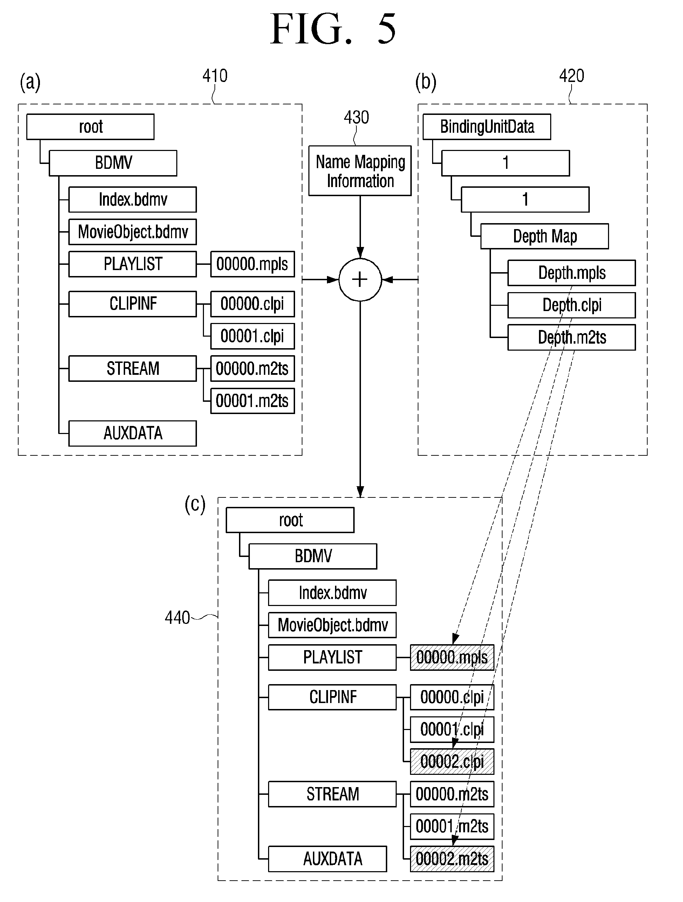

FIG. 5 is a view for explaining a specific method for generating a virtual data package. According to FIG. 5, the first data 410 detected from the recording medium 10 consists of a file system as the one illustrated in (a) in FIG. 5. (a) of FIG. 5 illustrates a configuration of a file system of a Blu-ray disc. The Blu-ray disc consists of a plurality of layers of an index table, movie object/BD-J object, playlist, clip, stream etc. A clip consists of a clip AV stream file which is a video stream file, and a clip information file which is a database type profile related to the clip AV stream file. A playlist is an information structure which shows in which order the bit streams used in reproducing should be reproduced. A playlist consists of a plurality of play items. In general, a playlist configures one content such as a movie or drama, and a playlist configures a chapter of that content. A play item of a playlist shows which video stream, audio stream, subtitle stream, and menu stream etc. should be reproduced, and more particularly, which stream ID(or stream number) and which stream profile it has. For example, in the case of video, the play item shows the video format, frame rate, and subtitle, while in the case of audio, the play item shows the stream profile such as a language code etc.

The second data 420 received from the server apparatus 200 consists of a file system as the one illustrated in (b) of FIG. 5. The controller 130 uses the name mapping information 430 in the manifest file, to combine the files in each file system and generate a virtual data package 440 as the one in (c) of FIG. 5. (c) of FIG. 5 illustrates a virtual data package 440 where data needed in the file system of the second data 420 are arranged at appropriate positions having the file system of the first data 410 as the basic structure. As such, the controller 130 configures the virtual data package 440 by appropriately arranging the data received from the server apparatus 200 on the playlist, clip information, stream, or additional data etc. in the file system of the recording medium 10. The data processor 140 may reproduce the content where the first and second data are combined based on the virtual data package 440.

A method of performing the network adaptive communication may be embodied in various ways according to various exemplary embodiments. Herein are specific explanations of exemplary embodiments regarding the method of performing the network adaptive communication.

### <First example of the network adaptive communication method>

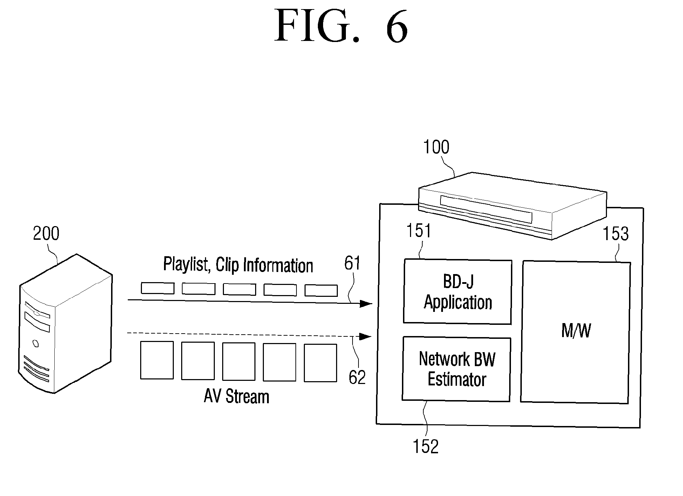

FIG. 6 is a view for explaining an exemplary embodiment configuring a virtual data package reflecting an initial network state.

According to FIG. 6, in the memory of the recording medium reproducing apparatus 100, programs such as (Blue-ray Disc Java) BD-J application 151, network bandwidth estimator 152, and middleware(M/W) 153 are stored.

The controller checks the initial network state using such a program, and selects the data to communicate with according to the checked network state. In the network state, various information such as a bandwidth, communication speed, and stability etc. may be included. More specifically, the manifest file may select the information corresponding to the initial network state in the manifest file and perform communication. Accordingly, as illustrated in FIG. 6, the playlist, clip information, and AV stream 61, 62 etc. may be received at a bit rate corresponding to the initial network bandwidth.

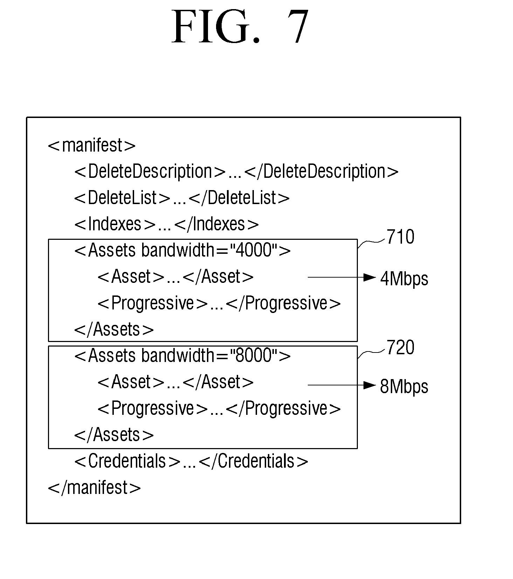

FIG. 7 illustrates a configuration example of a manifest file according to an exemplary embodiment. According to FIG. 7, the manifest file includes a list of multi-configured asset items 710, 720. The first asset item 710 is appropriate for use when the bandwidth is 4 Mbps, and the second asset item 720 is appropriate for use when the bandwidth is 8 Mbps.

The controller 130 selects the asset items corresponding to the initial network bandwidth from among the available asset items. For example, when the initial network bandwidth is 4 Mbps, the controller 130 may select the first asset item 710, and when the initial network bandwidth is 8 Mbps, the controller may select the second asset item 720.

In addition, the controller controls the communicator 120 to download the second data based on database connection information provided by the selected asset item. Database connection information is information provided for connection with the server apparatus 200. The database connection information may be name mapping information such as clip information and playlist etc.

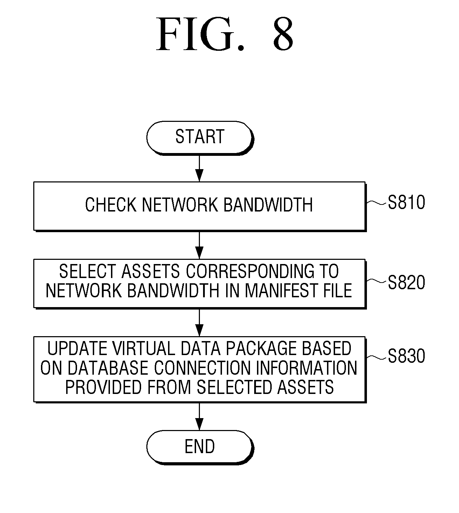

FIG. 8 is a flowchart for explaining a method for generating a virtual data package according to an exemplary embodiment. The method for generating a virtual data package may be performed in stages as the controller 130 executes the BD-J application 151 stored in the memory 150, the network bandwidth estimator module 152, and the middleware(M/W) 153 etc. According to FIG. 8, the network bandwidth estimator module 152 may check the network bandwidth (S810). When the network bandwidth is checked, the BD-J application 151 may select the asset item having the most appropriate bandwidth from among the asset items of the manifest file (S820).

The BD-J application 151 updates the data package of the first data with the virtual data package based on the database connection information such as the name mapping information(clip information, playlist etc.) provided by the selected asset item (S830). Then, the BD-J application 151 downloads the A/V stream sequentially based on the progressive playlist, and the middleware 153 controls the data processor 140 to perform reproducing on the downloaded AV stream based on the virtual data package.

In the present exemplary embodiment, the asset item to be downloaded is determined in the process of generating the initial virtual data package, and thus as illustrated in FIG. 6, the AV stream 62 fixed to one bit rate is received.

Further, the second data may be received considering the real time network state. Herein is an explanation of an exemplary embodiment where communication is performed according to the real time network state.

### <Second example of the network adaptive communication method>

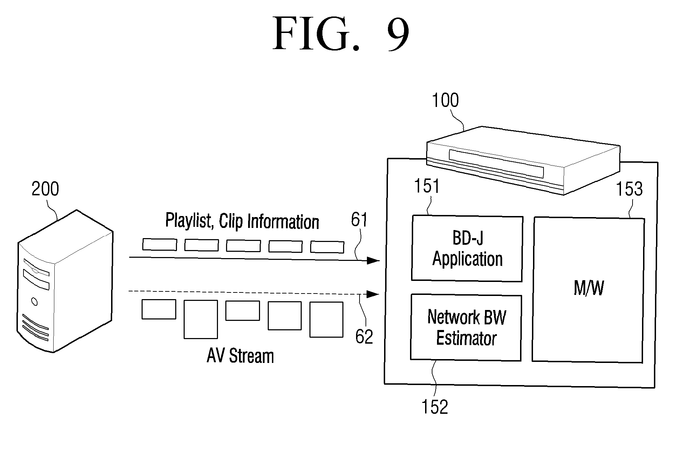

According to FIG. 9, an AV stream to be downloaded may be determined and received after checking the network even after the virtual data package is configured. Accordingly, as illustrated in FIG. 9, the bit rate of the AV stream 62 adaptively changes according to the network state.

According to FIG. 9, in the memory 150 of the recording medium reproducing apparatus 100, programs such as the BD-J application 151, network bandwidth estimator 152, and middleware(M/W) 153 etc. are stored. The controller 130 may use such programs to check the network state in real time, and then perform operations corresponding to the checked network state.

In the present exemplary embodiment, the manifest file must be multi-configured in the progressive or progressive asset level so as to determine the AV stream according to the network bandwidth.

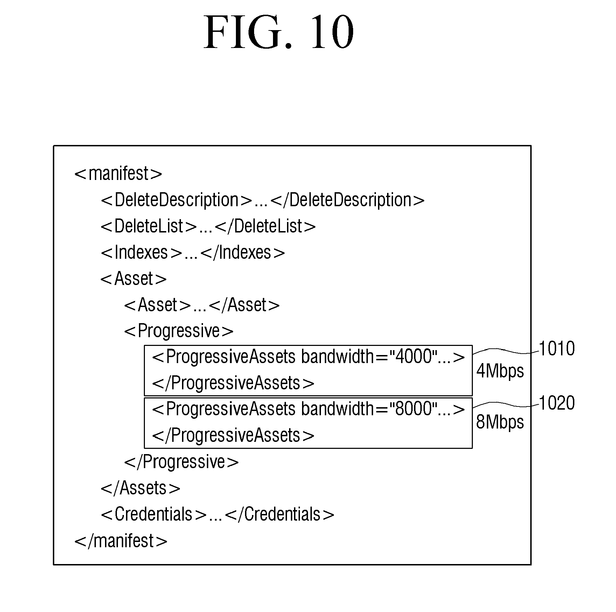

FIG. 10 is a configuration example of a manifest file according to the present exemplary embodiment. According to FIG. 10, the manifest file may include a multi-configured progressive playlist 1010, 1020. FIG. 10 illustrates a configuration which includes a playlist for use in 4 Mbps 1010 and a playlist 1020 for use in 8 Mbps.

The controller 130 controls the communicator 120 to select information corresponding to the network state checked in real time from among the information 1010, 1020 multi-configured in the manifest file, and receive the AV stream according thereto.

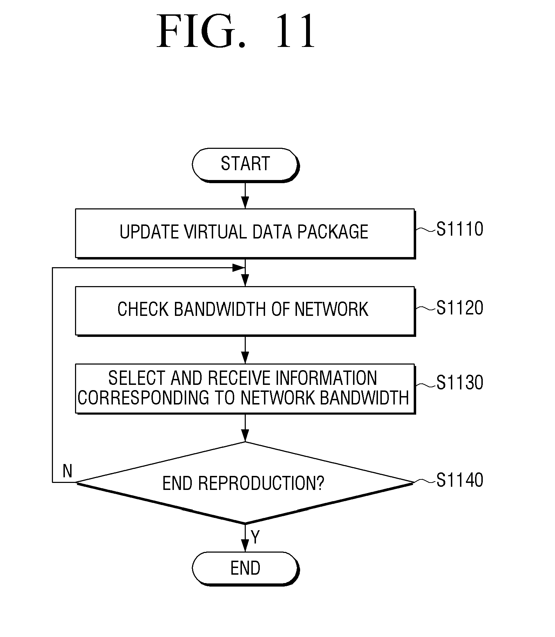

FIG. 11 is a flowchart explaining a data receiving method according to an exemplary embodiment. According to FIG. 11, the controller 130 updates the data package of the first data to a virtual data package (S1110). The virtual data package may be generated in the same method as that explained in FIGs. 6 to 8, but is not limited thereto. That is, it is possible to generate a virtual data package without considering the initial network bandwidth.

At a state where the virtual data package is updated, the controller 130 uses the network bandwidth estimator 152 to estimate the network bandwidth (S1120). When the bandwidth is checked, the BD-application 151 selects and receives the <progressive> or <progressiveasset> item having the most appropriate bandwidth from among the progressive playlist in the manifest file (S1130). The BD-J application 151 repeats the aforementioned step until the reproducing ends (S1140). Accordingly, it is possible to confirm the network bandwidth in real time while sequentially downloading the AV stream suitable thereto. The M/W 153 reproduces the downloaded A/V stream, that is, the second data in connection with the first data based on the virtual data package.

In the present exemplary embodiment, there is needed a method to connect the information of the generated virtual data package with the AV stream downloaded in real time according to the network state. In order to resolve this, the database configured through the initial update of the virtual data package may have multi-information selectable according to the bandwidth type.

Such multi information may be provided in various forms.

For example, it is possible to multi-configure and provide a play item and clip information including the clip_bitrate field which may be differentiated according to the bit rate.

More specifically, the PlayList() item of the xxxxx.mpls file includes a plurality of Playltem(). In a reserved area of each differentiated area, a clip_bitrate field is added. Accordingly, in the field of each area, clip information connectable according to the bitrate may be differentiated and recorded. For example, the Playitem information of which multi_bit_stream_ID is 0 may be interlocked to information of 00000.clpi connected to the m2ts file having a bit rate of 4 Mbps, and Playitem information having multi_bit_stream_ID=1 may be interlocked to 00000.clpi connected to the m2ts file having a bit rate of 8 Mbps. The recording medium reproducing apparatus 100 may interlock the AV stream which is received in real time to the virtual data package and reproduce based on such information.

In 00000.clpi, various files such as the m2ts file having bitrate of 4 Mbps, and 8 Mbps file may be configured together. In this case, the two files have the same name 00000.clpi, but the type of m2ts connected by clip_bitrate field defined inside 00000.clpi may be differentiated. M/W 153 may use the clip_bitrate field to separately connect the connectable playitem and clip_information with the m2ts file. Accordingly, the second data and first data received in real time may be appropriately combined, and reproduced.

Otherwise, in another example, clip information including the clip_bitrate field which may be differentiated according to the bitrate may be provided. In this case, in the playlist() item, a plurality of playitem() are included. Each playitem consists of a plurality of files except from 00000.clpi file which is differentiated by clip_bitrate field. M/W 153 may be connected to the m2ts file of the corresponding bitrate using the clip_bitrate field of the clip_information. Otherwise, in another example, it may be possible to configure a plurality of lists inside the clip information.

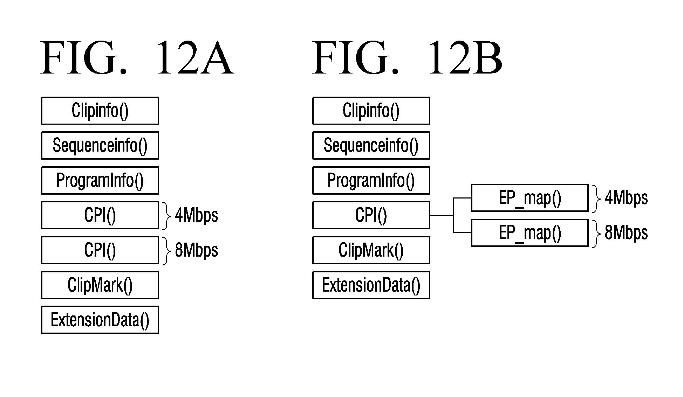

FIGS. 12A and 12B illustrate a structure of a cipi file where lists are multi-configured inside the clip information which may be differentiated according to the bitrate. In FIG. 12, the Playltem() and Clip information file included in the PlayList() item each has a single configuration. However, CPI() information including the clip information file may be differentiated according to the bitrate as illustrated in FIG. 12A, or the EP_map() information inside the CPI() may be differentiated by bitrate as illustrated in FIG. 12B. Bitrate differentiation information of the clip may be recorded in the reserved space in the CPI() information or EP_map(0) information.

As aforementioned, the controller 130 may use various methods to connect the virtual data package with the AV stream downloaded in real time according to the network state. However, because the BD-J application 151 is in charge of downloading the AV stream, depending on the embodiment method of the recording medium reproducing apparatus 100, there may be a case where it is not possible to differentiate the type of the downloaded AV stream. Such a case may occur when the M/W 153 reproduces based on the virtual data package initially configuring without additional information exchange with BD-J Application 151. To prepare against such a case, a method of enabling the M/W 153 to read the information on the AV stream that BD-J Application 151 has downloaded may be additionally provided.

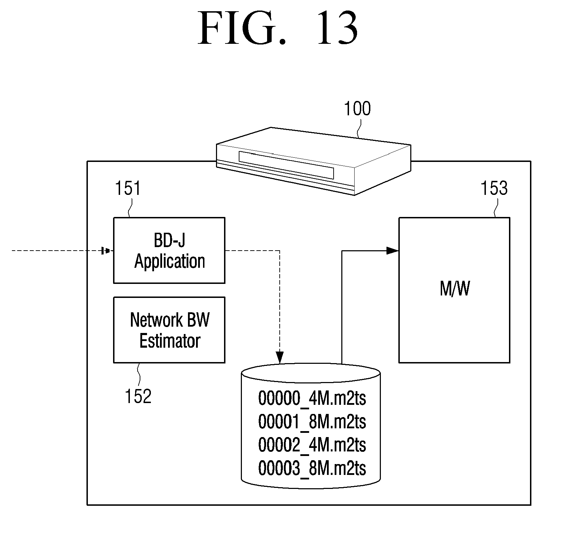

Specifically, a method of indicating the bitrate on the downloaded AV stream may be used. FIG. 13 illustrates an example of a file name according to such a method.

According to FIG. 13, regarding the downloaded AV stream, that is the m2ts file, the BD-J Application 151 may provide a name of Postifx method to the file name to explicitly differentiate the bitrate. Therefore, M/W 153 may differentiate the bitrate of the downloaded AV stream through the file name, and may identify the type of the connected database accordingly.

As aforementioned, the recording medium reproducing apparatus may receive the AV stream while checking the network state in real time, and connect the pre-generated virtual data package and the received AV stream, to perform reproducing. Unlike such an exemplary embodiment, it is also possible to update the virtual package itself in real time.

### <Third example of the network adaptive communication method>

Herein is a specific explanation on an exemplary embodiment for updating the virtual data package and reproducing the content.

According to the exemplary embodiment, the recording medium reproducing apparatus 100 regularly may check the network state even after initially updating the virtual data package and update the virtual data package in real time. More specifically, the recording medium reproducing apparatus 100 may determine the type of AV stream, playlist, and clip information to download, and update in real time the virtual data package based on the downloaded result. In the present exemplary embodiment, the manifest file must be multi-configured so as to be able to determine the <Assets> according to the bandwidth. For example, the manifest file may be configured to enable selecting one of various bandwidths such as 4 Mbps, 8 Mbps as in FIG. 7. The present exemplary embodiment is similar to the aforementioned example 2 in that the network state is checked in real time, but the item which is downloaded in real time is not limited to the AV stream, and the present exemplary embodiment is different from the aforementioned example 2 in that the information related to the database such as the playlist or clip information which is connected to the AV stream is downloaded in real time.

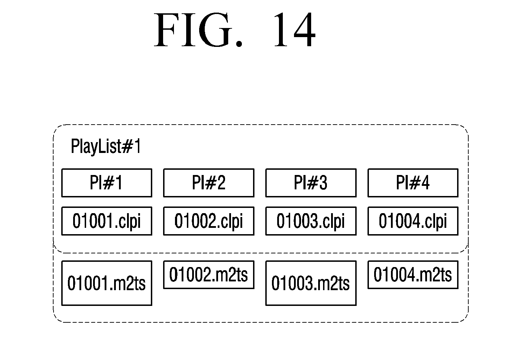

FIG. 14 illustrates items downloaded in real time according to the real time network state in the recording medium reproducing apparatus according to the present exemplary embodiment. According to FIG. 14, it is possible to receive various data such as the play item, clip file, m2ts file etc. in the playlist and update the virtual data package accordingly. According to FIG. 14, the size of each AV stream received according to the network state is different.

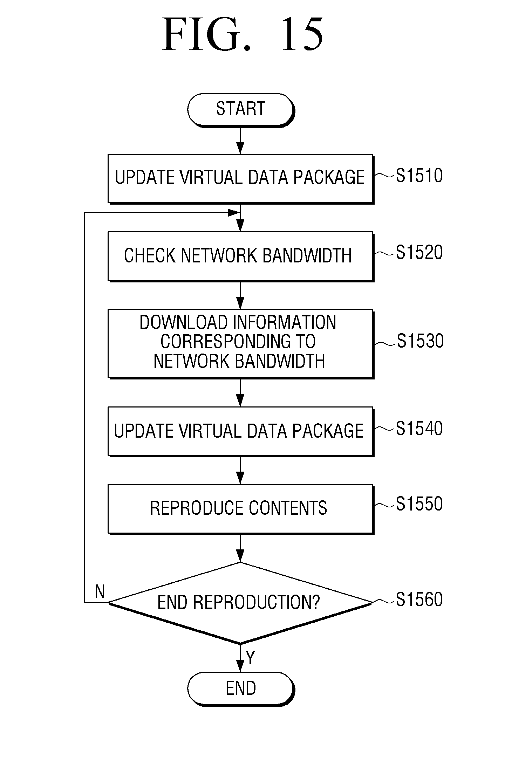

FIG. 15 is a flowchart for explaining a virtual data package update method according to the present exemplary embodiment. According to FIG. 15, at a state where the virtual data package is initially updated (S1510), the recording medium reproducing apparatus 100 checks the network bandwidth (S1520). Herein, the virtual data package may be generated in consideration of the initial network bandwidth, or may be generated selectively. In addition, the network bandwidth may be checked in real time using the network bandwidth estimator module 152 as aforementioned.

When the network bandwidth is checked, the BD-J Application 151 of the recording medium reproducing apparatus 100 selects the <Assets> having the most appropriate bandwidth from among the <Assets> of the manifest file. In addition, the BD-J Application 151 downloads database connection information such as the name mapping information(Clip information, Playlist etc.) and the progressive playlist etc. provided by the corresponding <Assets> (S1530). Accordingly, the virtual data package is re-updated based on various information that is downloaded (S1540). The M/W 153 of the recording medium reproducing apparatus 100 generates content based on the virtual data package (S2050). The recording medium reproducing apparatus 100 may repeat these steps until the reproducing ends (S1560), and may reflect the network state in real time.

As such, the recording medium reproducing apparatus may receive the second data in a stable manner by using a method adaptive to the network state from the server apparatus 200. Accordingly, it is possible to reproduce a variety of content using the first data and second data recorded in the recording medium 10 together.

Herein specific explanations on types of data processed in an apparatus for reproducing recording medium and on operations of the apparatus for reproducing recording medium according to different exemplary embodiments are discussed. The exemplary embodiments explained herein may be embodied together with the exemplary embodiments which perform network adaptive communication as aforementioned, but are not limited thereto. That is, operations according to the exemplary embodiments hereinbelow may well be performed in an apparatus for reproducing recording medium performing communication without considering a network state.

### <Exemplary embodiment for reproducing stereoscopic content>

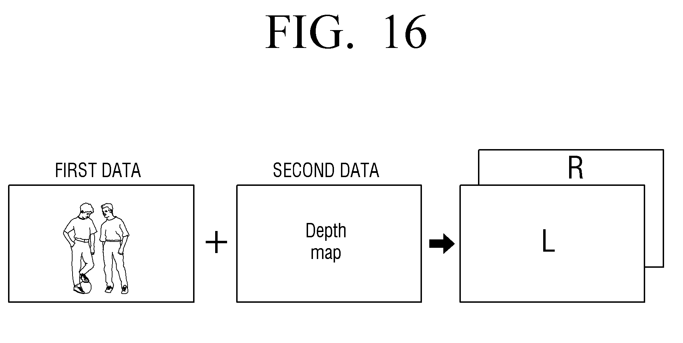

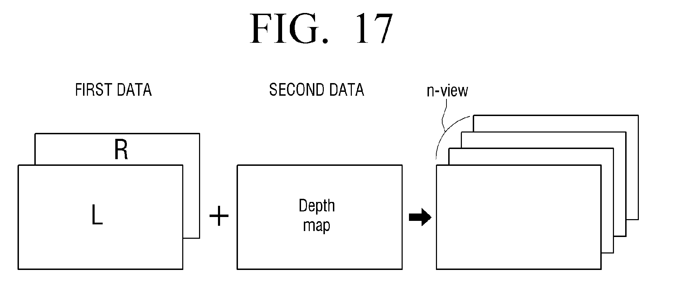

FIGs. 16 and 17 are views for explaining operations of an apparatus for reproducing recording medium according to another exemplary embodiment. According to the present exemplary embodiment, the apparatus for reproducing recording medium may receive a depth map or disparity map as second data, and reproduce stereoscopic contents based on the received depth map or disparity map.

FIG. 16 illustrates a case where first data includes 2D BD(Blu-ray Disc) title, and second data includes a depth map. In this case, the apparatus for recording medium may generate a stereoscopic image or a multi-view image using a 2D BD title and depth map. A stereoscopic image refers to two images of one subject photographed in different angles, more specifically a left eye image and a right eye image. A multi-view image refers to a plurality of images photographed at different time points. In general, a multi-view image may refer to images photographed at three or more time points.

A depth map shows changing states of a depth configured in one image. Herein, a depth refers to information on an extent of a stereoscopic effect such as a distance between the subject and camera, and a distance between the subject and the recording medium(for example, film) where an image of the subject is formed etc. That is, the greater the distance difference(that is, disparity) between the corresponding points of a left eye image and a right eye image, the greater the stereoscopic effect. A depth map shows changing states of such a depth configured in one image, and may be expressed in grey levels which differ depending on the size of distance between the points of the left eye image and right eye image that correspond to each other. A disparity map is information on disparity which is a distance between the points of the left eye image and right eye image corresponding to each other. FIG. 17 illustrates a case where first data includes a 3D BD title, and second data includes a depth map. In this case, the apparatus for reproducing recording medium 100 may generate a multi-view image using a depth map.

As aforementioned, in the present exemplary embodiment, it is possible to use the server apparatus 200 to provide additional information such as the depth map or disparity map, so as to configure stereoscopically. Therefore, even when there is insufficient physical storage capacity in the recording medium, it is possible to provide a 3D image or multi-view image. In addition, in order to record a depth map or disparity map in a Blu-ray disc, additional time is spent for generating and recording such additional information besides the time spent for producing a title. Therefore, it takes longer time to release the recording medium to market. However, according to the present exemplary embodiment, it becomes possible to provide such additional information through the server apparatus 200 even after the recording medium is released, and thus it is possible to provide stereoscopic content regardless of lack of capacity or delay in market release.

As illustrated in FIGs. 16 and 17, in a case where additional information is included in second data, the controller 130 of the apparatus for reproducing recording medium 100 uses first data detected from the recording medium 10 and the second data received through the server apparatus 200 to generate a virtual data package, and then stores the generated virtual data package to the memory 150. Accordingly, in the virtual data package, additional information such as the aforementioned depth map or disparity map may also be stored.

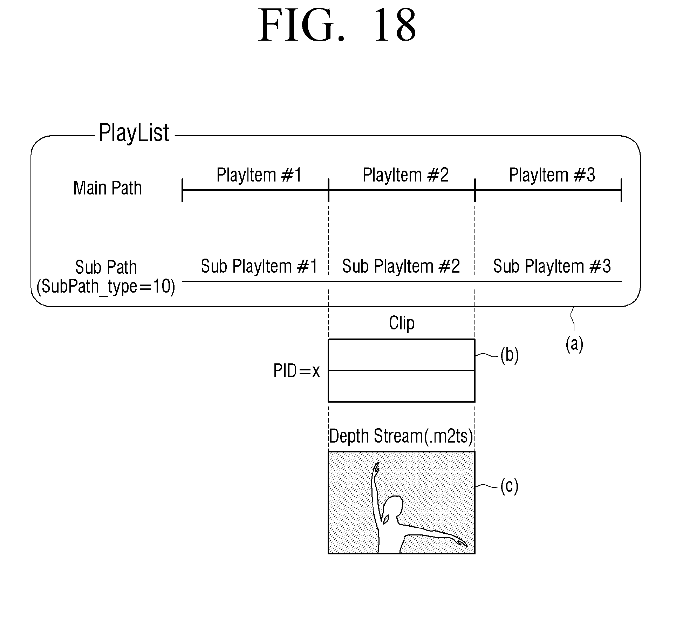

FIG. 18 illustrates an example of a configuration of a sub path for detecting additional information inside the virtual data package. According to FIG. 18, inside a playlist (a), there exists a main path and sub path. Play items exist in the main path, and various sub play items exist in the sub path.

FIG. 18 illustrates a case where a depth map stream is provided through the sub path defined as Subpath_type=10. More specifically, FIG. 18 illustrates detecting a depth map (c) from a packet defined as PID=x from among the clip information (b) included in the sub play item #2 from among the sub paths, and using the detected depth map (c). As illustrated in FIG. 18, the Blu-ray disc database may be expanded to provide various additional information needed for the stereoscopic effect such as a depth map and disparity map.

In a case of providing additional information such as the depth map or disparity map etc., information for configuring stereoscopic content must also be provided using the additional information provided.

The additional information may be provided by expanding an index table file. More specifically, AppInfoBDMV() for supporting multi-view may be expanded inside the index.bdmv, and various information may be recorded therein. In the reserve area of the expanded AppInfoBDMV(),multiview_output_mode_preference and Depth_content_exist_flag etc. may be additionally provided.

multiview_output_mode_preference is a portion where a value determining whether to maintain an initial output mode or to output as multi-view mode is recorded. More specifically, multiview_output_mode_preference is configured as follows:

**[Table 1]**

| multiview_output_mode_preference | Meaning |
|---|---|
| 0 | Preserve Initial Output Mode |
| **1** | Multi-view Output Mode |

In addition, Depth_content_exist_flag is a flag where a value for notifying whether or not additional information exists is recorded. More specifically, Depth_content_exist_flag may be configured as in table below.

**[Table 2]**

| Depth_content_exist_flag | Meaning |
|---|---|
| 0 | Profile 7 functionality is not used |
| 1 | Profile 7 functionality may be used |

Profile 7 in table 2 is a newly defined service using the additional information.

Otherwise, it may be possible to expand AppInfoPlayList() included in the movie playlist (xxxxx.mpls) file, and record various additional information therein. More specifically, it may be possible to provide DepthMap_matching_flag in a reserve area inside AppInfoPlayList(), and record information therein. DepthMap_matching_flag refers to signaling information for instructing whether a depth map is a depth map matching the main image(that is, base view) which is a reference or a depth map matching a sub image(that is, Dependent view) and not a main image, from among the left eye image and right eye image. More specifically, DepthMap_matching_flag may be defined as in the table below.

**[Table 3]**

| DepthMap_matching_flag | Meaning |
|---|---|
| 0 | DepthMap matches MVC Base view video |
| 1 | DepthMap matches MVC Dependant view video |

Otherwise, it is possible to expand the sub path type and provide the signaling information. More specifically, it is possible to expand the playlist() included in the movie playlist(xxxxx.mpls) file and provide additional information. For example, it is possible to define a depth map provided in Out-of-mux format to Subpath_type=0x05 as in the table below.

**[Table 4]**

| Subpath_type | Meaning |
|---|---|
| ... | ... |
| 5 | Out-of-mux and Synchronous type of one or more elementary streams path (Primary audio, PG, IG, Secondary audio path). |
| | Out-of-mux and Synchronous type of Picture-in-Picture presentation path. |
| | Out-of mux MPEG-4 MVC Dependent view video presentation path. |
| | Out-of-mux and Synchronous type of DepthMap |
| ... | ... |

Otherwise, to provide a depth map through STN(), it may be possible to expand stream_entry(), stream_attributes() and newly define a depth map.

Otherwise, it is possible to expand the clip information and provide additional information. More specifically, it may be possible to expand the clipinfo() portion inside the clip information file(zzzzz.clpi) and provide a depth map. For example, it may be possible to expand application_type of the syntax of clipinfo() and provide a depth map. The application_type may be expanded as in the table below.

**[Table 5]**

| application_type | meaning |
|---|---|
| ... | ... |
| 10 | Sub TS for a sub-path of DepthMap video |

As aforementioned, the apparatus for reproducing recording medium 100 may detect additional information such as a depth map or disparity map based on the expanded dataset, and generate a stereoscopic image or multi-view image using the detected additional information.

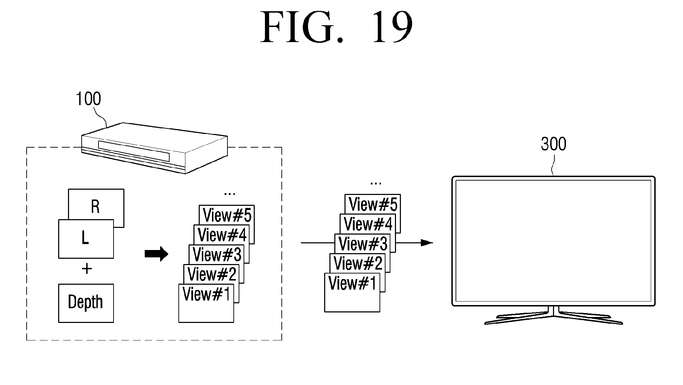

FIG. 19 illustrates a case of generating images of a plurality of different points using a stereoscopic image and depth map and providing the generated images to the external apparatus 300. According to FIG. 19, the data processor 140 of the apparatus for reproducing recording medium 100 may generate images of a plurality of different points using a depth map based on a left eye image (L) and a right eye image (R) read from the recording medium 10.

More specifically, having one of the left eye image and right eye time as the reference image, the data processor 140 checks the depth of each pixel inside a reference image based on the depth map. The data processor 140 shifts each pixel of the reference image as much as the distance corresponding to the checked depth, and generates a new image. The generated image becomes an image of the subject seen from a distance as much as a predetermined angle from the reference image. In such a method, the data processor 140 may generate various numbers of images of different points. The interface 160 transmits the generated images to the external apparatus 300. As aforementioned, the interface 160 may be embodied as an uncompressed interface such as HDMI etc.

The external apparatus 300 may receive images of various points through the interface 160 and display a multi-view screen. The multi-view screen may be configured in various methods depending on the type of the external apparatus 300.

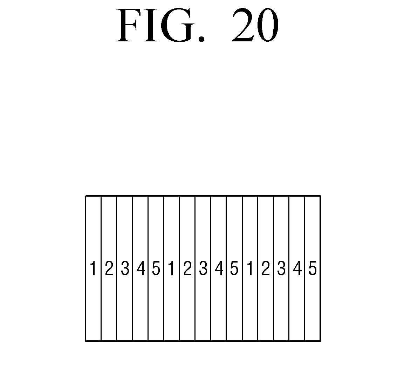

FIG. 20 illustrates an example of a display method for a no-glass type external apparatus 300. More specifically, the external apparatus 300 may differentiate each of the images of 1 to 5 points by a plurality of vertical lines, and then combine images of each point by a vertical line, to generate one frame. Accordingly, images of different points are recognized by the left eye and the right eye of the user, enabling the user to sense the stereoscopic effect.

The external apparatus 300 may be embodied as a display apparatus such as a TV or monitor etc., which has display means. The external apparatus 300 displays a plurality of images depending on the type thereof, enabling the user to sense the stereoscopic effect.

FIGs. 19 and 20 illustrate directly transmitting images of a plurality of different points to the external apparatus 300, and then combining each image by vertical lines in the external apparatus 300, but in some cases, the images of a plurality of different points may be configured in the format of FIG. 20 in the external apparatus 300, and then be transmitted to the external apparatus 300.

In addition, FIGs. 19 and 20 illustrate generating multi-view images in an apparatus for reproducing a recording medium 100, but multi-view images may be generated in an external apparatus as well.

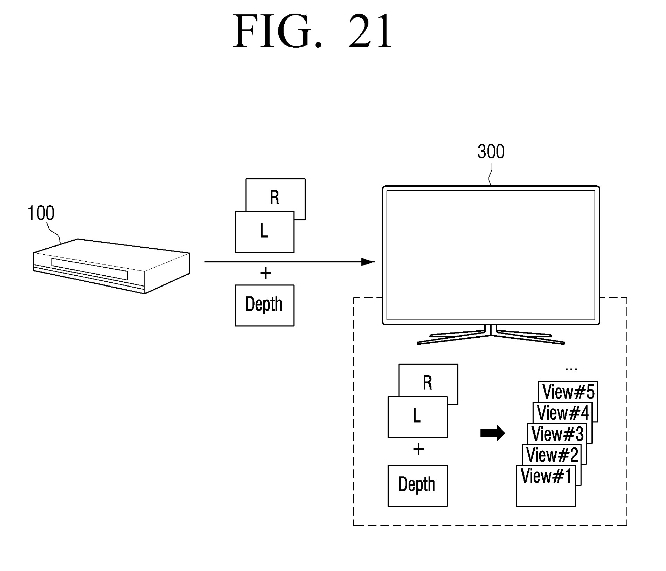

FIG. 21 illustrates a case of generating multi-view images in an external display apparatus. According to FIG. 21, the controller 130 transmits the left eye image and right eye image (L, R) included in the virtual data package to the external apparatus 300 through the interface 160 together with the depth map. The external apparatus 300 uses the left eye image and right eye image and depth map to generate multi-view images (view#1 ∼ #5), and then uses the generated multi-view images to display a multi-view screen.

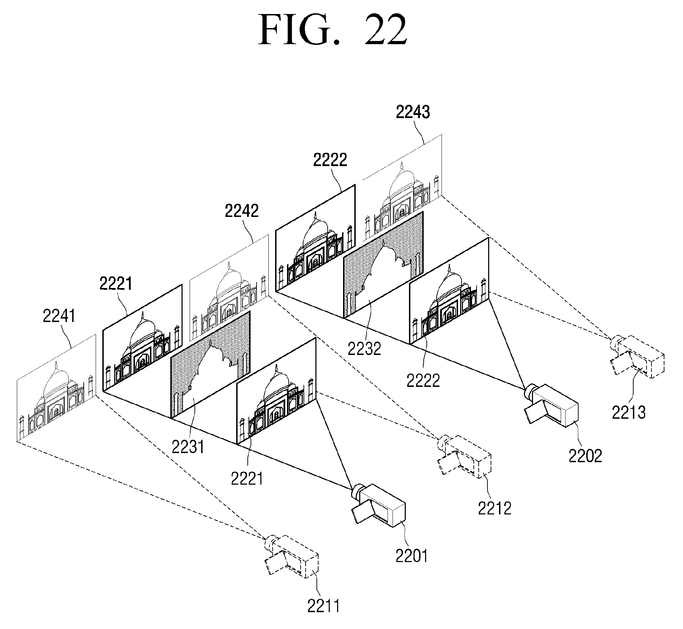

FIG. 22 illustrates an exemplary embodiment using two images and two depth maps to generate multi-view images. FIG. 22 illustrates a case where two actual images 2221, 2222 are photographed by two actual cameras 2201, 2202, and depth maps 2231, 2232 corresponding to those images 2221, 222 are provided.

The apparatus for reproducing recording medium 100 uses two actual images 2221, 2222 and two depth maps 2231, 2232 to generate multi-view images 2241, 2242, 2243 photographed by three virtual cameras 2211, 2212, 2213. Accordingly, a total of five images 2241, 2221, 2242, 2222, 2243 are obtained.

As such, the apparatus for reproducing recording medium 100 uses the data recorded in the recording medium 10 and the data provided from the server apparatus 200 to generate stereoscopic content.

Besides the above, in the apparatus for reproducing recording medium 100, it is possible to display an image reproduced from the recording medium 10 and an image provided from the server apparatus 200 on one screen to overlap each other. Accordingly, various types of screens may be formed.

### <Exemplary embodiment of providing PIP>

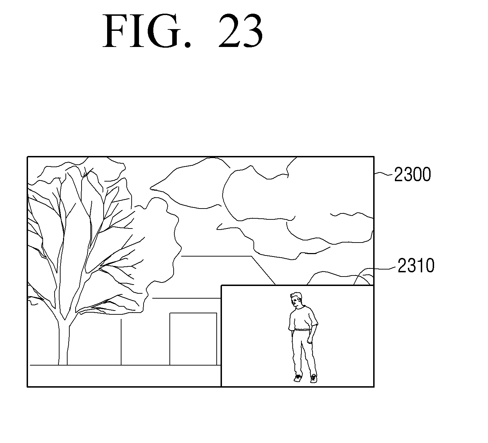

FIG. 23 illustrates an example of a screen configured by an apparatus for reproducing recording medium 100 according to another exemplary embodiment of the present disclosure. According to the present exemplary embodiment, first data detected from the recording medium 10 includes main image data, and second data received from the server apparatus 200 includes sub image data. The data processor 140 may use the main image data and sub image data to add the sub image 2310 inside the main image screen 2300 and display a PIP(Picture In Picture) screen. Each of the main image and sub image may also be called a primary video and a secondary video.

FIG. 23 illustrates a state where a square-type PIP screen 2310 is displayed on the screen 2300. However, the PIP screen 2310 may have one of various shapes, and the number of the PIP screen 2310 may also be plural and not limited to one. In addition, a gradation effect may be applied to the PIP screen 2310.

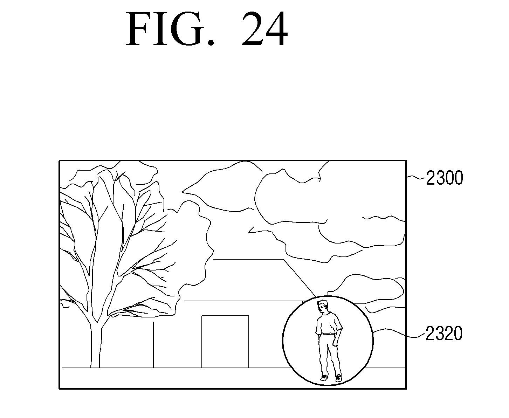

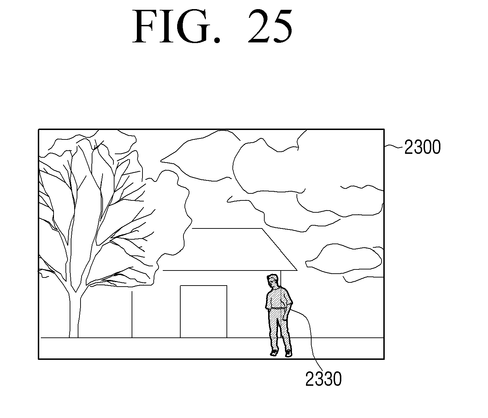

FIG. 24 illustrates a state where a round shape PIP screen 2320 is displayed inside the main image screen 2300. FIG. 25 illustrates a state where, of the additional images, only an object 2330 besides the background is separated and displayed. According to FIG. 25, the object 2330 may be configured to be transparent according to a predetermined transparency and be displayed inside the main image screen 2300.

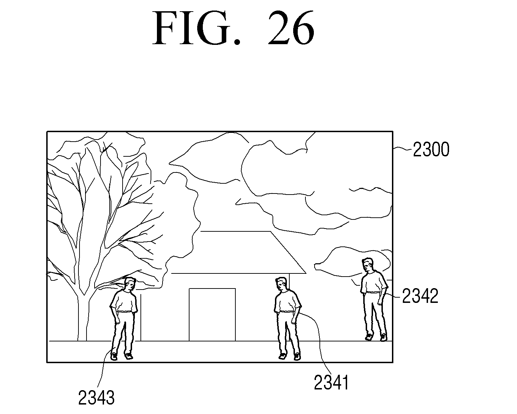

FIG. 26 illustrates a state where a plurality of objects 2341, 2342, 2343 generated using a plurality of images are displayed inside the main image screen 2300. The displaying location of each object 2341, 2342, and 2343 may be determined selectively. All the objects may be expressed the same, but may also be expressed to have the same shapes but in different directions as in the third object 2343.

The apparatus for reproducing recording medium 100 may use α plane as a kind of mask, to display various additional images as illustrated in FIGs. 23 to 26. α plane may be provided based on a binary or gray scale.

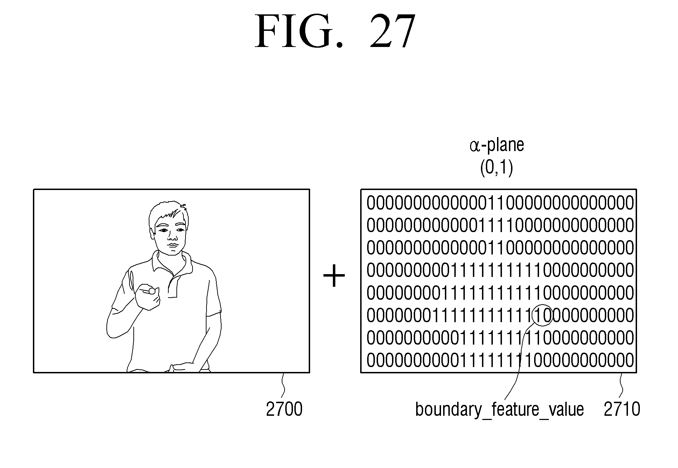

FIG. 27 illustrates α plane 2710. According to FIG. 27, α plane 2710 is expressed as 0 or 1 value. The portion that corresponds to a human or other object of the sub image 2700 may be expressed as 1 value, and the remaining background portion may be expressed as 0 value. The data processor 140 may overlap α plane 2710 regarding the sub image 2700. If 1 value is defined as nontransparent, and 0 value is defined as transparent, in the sub image, only the object portion is shown on the screen, and the background is deleted. Accordingly, rather than the square shape PIP screen being displayed, only the separated object may be displayed inside the main image screen.

In FIG. 27, alpha_value refers to the overall transparency value of the sub image. In addition, boundary_feature_value defines the gradation section in the boundary portion between the object and the background. As such, when an image is compounded using the α plane, it is possible to provide the transparency regarding the object or express the gradation effect or fade in/out effect. Accordingly, it is possible to provide a natural image.

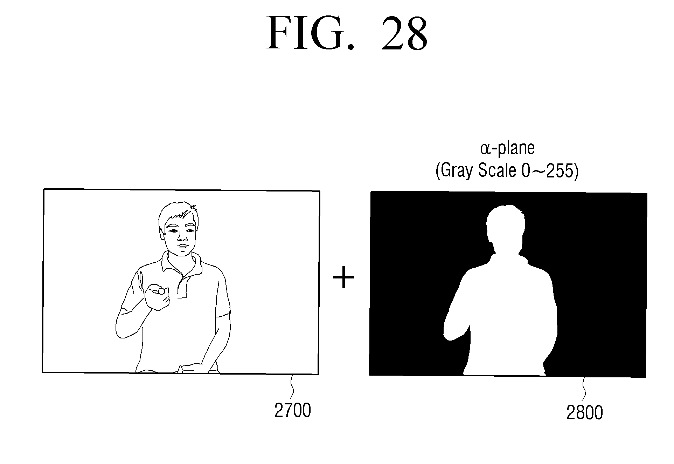

FIG. 28 illustrates α plane configured in gray scale. According to FIG. 28, the α plane 2800 corresponding to the sub image 2700 may be expressed in 0 to 255 level gray value. In α plane 2800, 255 may be defined as completely nontransparent, and 0 may be defined as completely transparent. As such, it is possible to provide an alpha blending value of a pixel unit through the value between 0 and 255. The data processor 140 may use such an α plane to express various shapes of PIP screens. The α plane configured by the gray scale may express the transparency and gradation through the change of transparency value of the gray scale.

Such α plane data may also be received from the server apparatus 200 together with the sub image data.

α plane stream may be provided based on lossy encoding basis or lossless AVC(Advanced Video Coding), MPEG2, HEVC (High Efficiency Video Coding) encoding basis. The lossy encoding basis is a method of reducing the amount of necessary bitrate by compressing and transmitting in a lossy encoding method similar to the encoding method of a general RGB image, in providing α plane of the gray scale basis as a stream. More specifically, encoding methods such as AVC (Advanced Video Coding), MPEG2, HEVC (High Efficiency Video Coding) etc. may be used.

Lossless encoding basis is a method of encoding and transmitting without loss so that the original α plane value is not converted, in providing the gray scale basis or α plane of binary data basis as a stream. More specifically, encoding methods such as RLE (Run Length Encoding) etc. may be used.

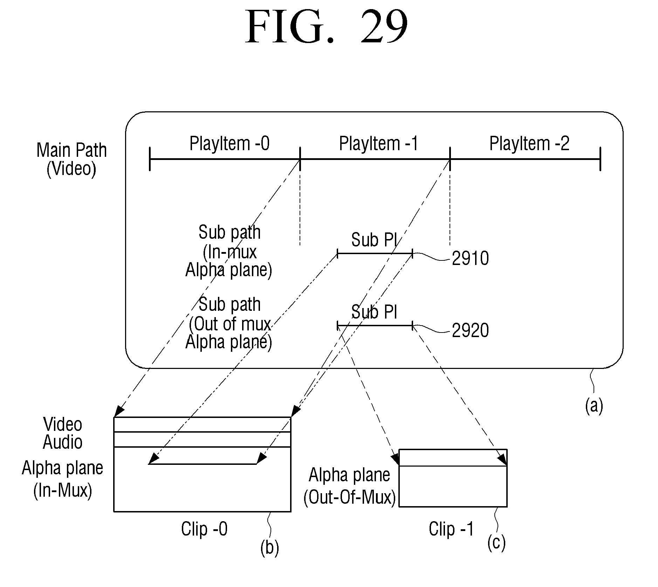

FIG. 29 illustrates an example of a database structure to which a path which provides α plane is added. According to (a) of FIG. 29, in the main path, a plurality of sub paths are provided. One of them is a first sub path 2910 for providing In-mux Alpha plane, and another is a second sub path 2920 for providing Out of mux Alpha plane.
(b) of FIG. 29 illustrates clip information of the first sub path 2910. According to (b) of FIG. 29, α plane is provided together with video data and audio data. (c) of FIG. 29 illustrates clip information of the second sub path 2920. According to (c) of FIG. 29, an additional α plane may be provided.

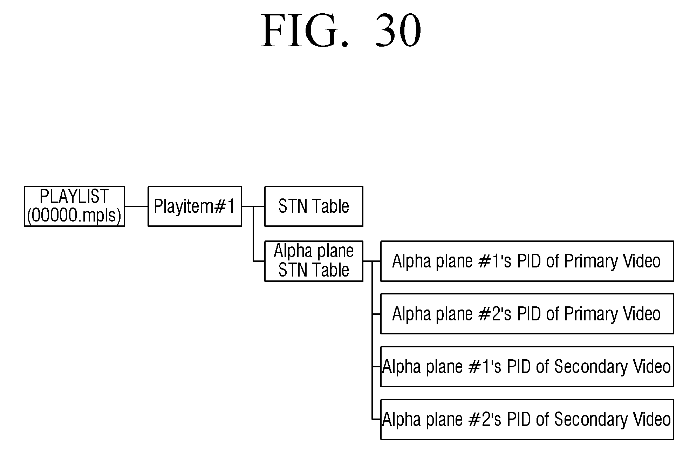

FIG. 30 illustrates another example of a database structure for providing α plane. A plane may be related to the main image or sub image. The relationship between each image and α plane may be defined in the Alpha plane STN Table.

According to FIG. 30, in the Alpha plane STN Table where a play item in the playlist defined, a PID of α plane) #1, #2 regarding the main image (Primary Video) and a PID of α plane) #1, #2 regarding the sub image (secondary video) etc. may be defined.

Otherwise, in the Alpha plane STN Table, the stream ID information of α plane which may be mapped with the main image (or primary video) and sub image(or secondary video) may be stored. The controller 130 may use such stream ID information to selectively change the α plane to be applied to the video.

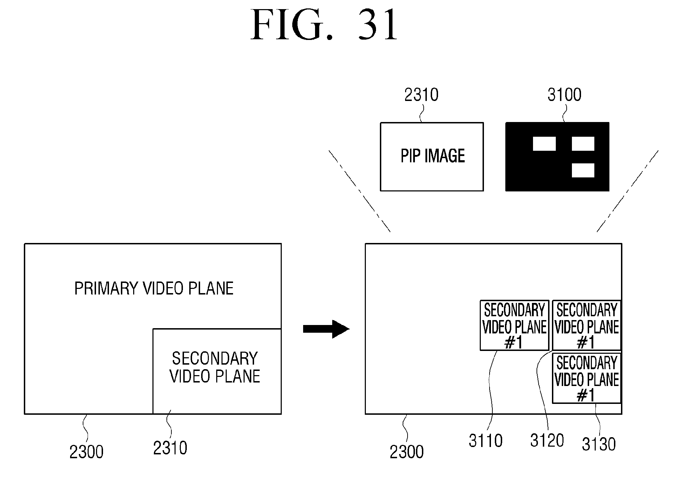

FIG. 31 is a view for explaining a method of displaying a plurality of sub images using the α plane. In the apparatus for reproducing a Blu-ray disc, it is possible to express two video planes. In the apparatus for reproducing recording medium 100 according to the present exemplary embodiment, it is possible to generate a plurality of sub images using α plane without increasing the number of the video planes. Accordingly, an effect of providing a plurality of PIP may be obtained.

According to FIG. 31, α plane 3100 including a plurality of transparent areas may be provided together with the main image 2300 and sub image 2310. The data processor 140 applies α plane regarding the sub image 2310 and display a plurality of sub images 3110, 3120, 3130 in the main image screen 2300 in an overlapping manner.

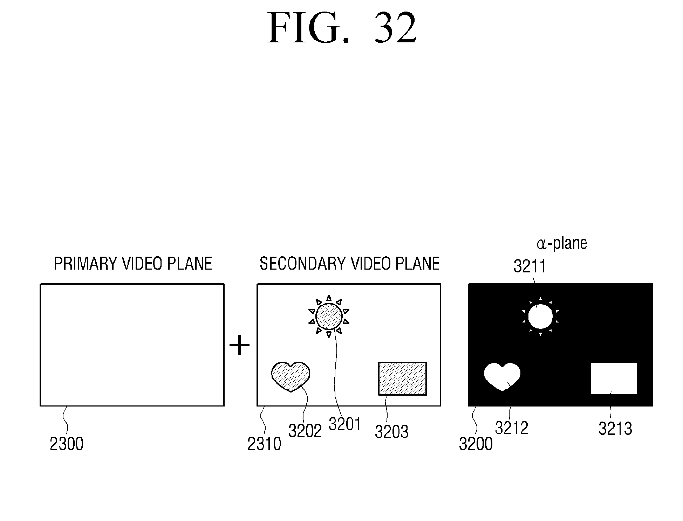

FIG. 32 is a view for explaining a method of expressing an animation effect using α plane. According to FIG. 32, a sub image 2310 and α plane 3200 are used to provide a plurality of animation objects on the main image screen 2300. The α plane 3200 includes a plurality of transparent areas 3211, 3212, 3213, and the sub image 2310 displays a plurality of animation objects 3210, 3202, 3203. At this state, the data processor 140 uses α plane 3200 to apply transparency to each animation object 3210, 3203, 3203. An animation object 3201, 3202, 3203 may be a moving graphic object, but is not limited thereto. That is, regarding a still graphic object or general actual image, it is possible to apply α plane 3200 and express in PIP.

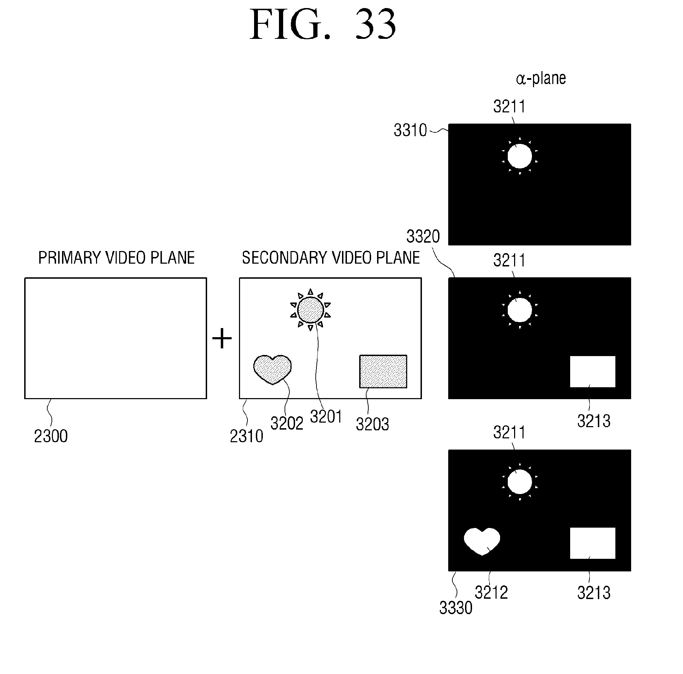

Further, a plurality of α planes may be provided. FIG. 33 illustrates a case where a plurality of α planes are used.

According to FIG. 33, the apparatus for reproducing recording medium 100 may receive a plurality of α planes 3310, 3320, 3330 data. In each α plane 3310, 3320, 3330, transparent areas 3211, 3212, and 3213 may be arranged in appropriate shapes and numbers. The data processor 140 may selectively apply α plane 3310, 3320, 3330 and provide compound images of various effects.

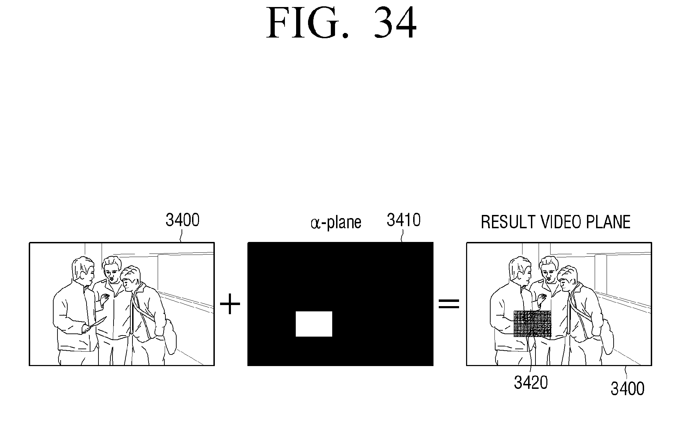

FIG. 34 illustrates a case of using α plane to provide a mosaic effect. Mosaic effect refers to an effect of processing an image to look blurry. According to limitation on viewing age, it is possible to apply a mosaic effect to images that should not be viewed by minors such as weapons, cigarettes, and human body parts etc. The data processor 140 may apply α plane 3410 to an image 3400, and generate a mosaic-processed 3420 image 3400. An image to be mosaic-processed 3400 is not limited to a sub image, but may be a main image. In this case, information such as Alpha_plane_dependency, Alpha_plane_presentation_type, Mosaic_type etc. may be further provided. Alpha_plane_dependency is information for instructing whether the α plane is related to the main image or the sub image. Alpha_plane_presentation_type is information for instructing whether Alpha_plane_presentation_type is used by α plane for determining the transparency or used for a mosaic effect. Mosaic_type is information for instructing an expressible mosaic type when Alpha_plane_presentation_type is determined in mosaic effect.

As aforementioned, the apparatus for reproducing recording medium 100 may use α plane to provide various overlapping screens.

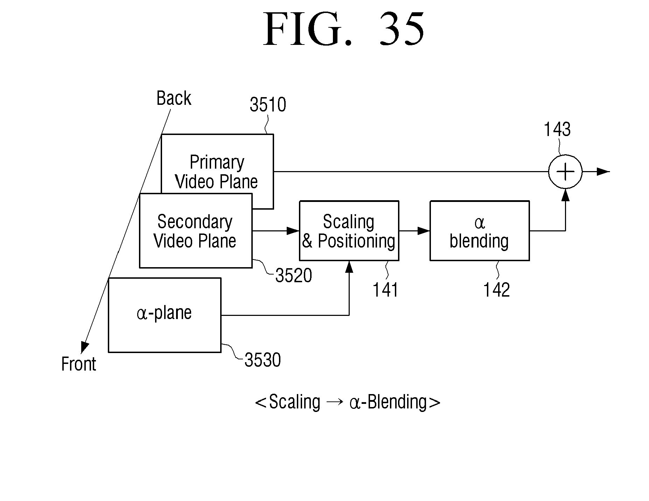

FIGs. 35 to 37 are views for explaining various methods for processing sub images in the data processor 140 according to one or more exemplary embodiments.

According to FIG. 35, the data processor 140 includes a scaler 141, alpha blender 142, and adder 143. The data processor 140 may store at least one buffer, a main image and sub image etc.

The scaler 141 may perform upscaling or downscaling regarding the sub image 3520 and α plane 3530, when the resolution and output resolution of the sub image 3520 and α plane 3530 are difference from each other. In addition, the scaler 141 may also perform a positioning operations of designating an area to be blended to an object of the sub image 3520 in the α plane 3530.

Alpha blender 142 may perform alpha blending by applying α plane 3530 to the sub image 3520. In addition, adder 143 mixes the alpha blended image to the main image 3510. Accordingly, an overlapping image may be generated.

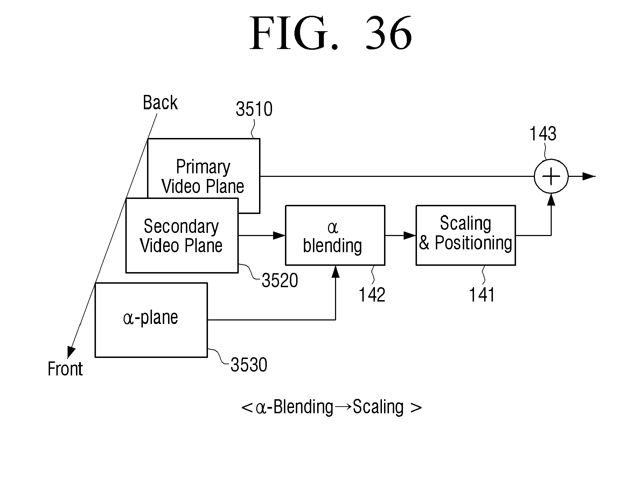

FIG. 36 illustrates a configuration of a data processor performing scaling after alpha blending. According to FIG. 36, the alpha blender 142 receives the sub image 3520 and alpha plane 3530 and performs alpha blending. Then, the scaler 141 scales and positions the alpha blended image, and adder 143 mixes the scaled image and the main image 3510.

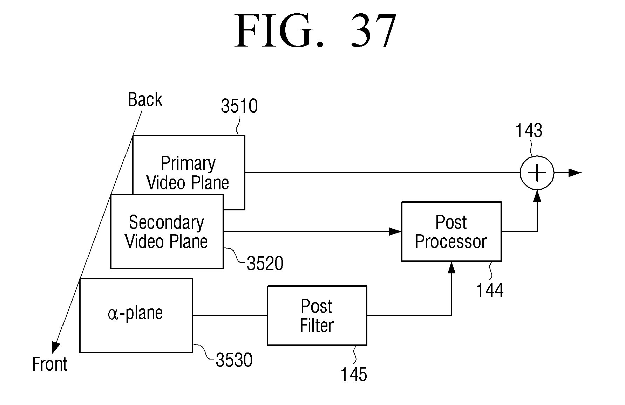

FIG. 37 illustrates another configurative example of the data processor 140. According to FIG. 37, the data processor 140 includes a post filter 145, post processor 144, and adder 143. FIG. 37 is a configuration for minimizing an artifact which may occur in α plane when video coding according to the aforementioned lossy encoding method.

That is, in a case of configuring α plane image stream in the lossy encoding method, there may exist a defect such as a blocking during a restoration process. The post filter 145 filters the defective portion in the α plane 3530. In addition, the post processor 144 alpha blends the restored α plane 3530 and the sub image 3520, and performs a process such as scaling and positioning. Adder 143 mixes the processed image and main image 3510.

Further, it may be possible to utilize α plane and position reference information in order to configure a user screen.

Particularly, in a case where there are various use interactions, various objects such as PG(Parental Guidance) information, IG(Interactional Guidance) information, and PIP etc. may be expressed on one screen at the same time. Herein, each object may overlap one another, in which case it is possible to utilize α plane and position reference information to display the entirety or a portion of some objects transparently. This is not limited to a PIP image, and even regarding the main image portion, it is possible to utilize α plane to provide a position to provide PG,IG screen.

As such, in the apparatus for reproducing recording medium, it is possible to receive various additional information such as sub image data and α plane information etc. through the server apparatus, and configure various screens. In such additional information, information on objects for user interaction may be included. Hereinbelow is explanation on an exemplary embodiment providing additional information for user interaction.

### < Exemplary embodiment providing user interaction by object unit>

As aforementioned, as the performance of display apparatuses improve, content is also evolving into realistic content such as UHD grade ultra- definition content and 3D stereoscopic content etc. Accordingly, in the exemplary embodiments hereinbelow, a user interaction object is provided so as to actively use content beyond just viewing the content. There may be various user interaction objects such as notice messages for informing the user or menus selectable by the user.

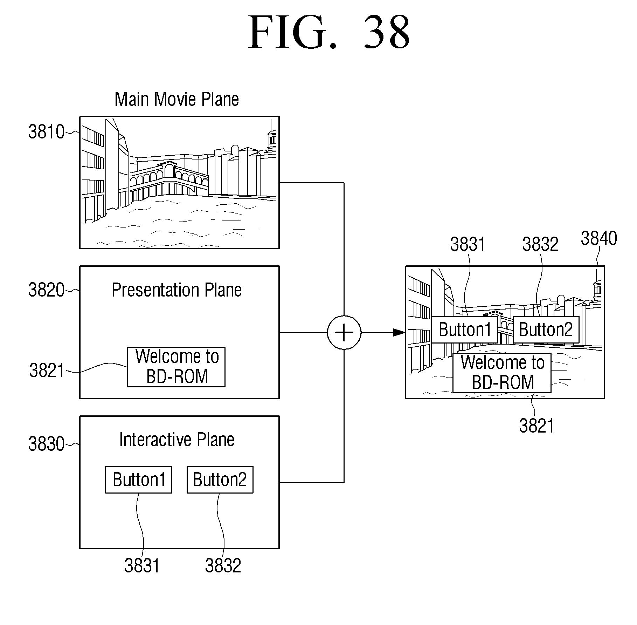

FIG. 38 is a view for explaining a user interaction object display method in an apparatus for reproducing recording medium according to another exemplary embodiment. Information on a user interaction object may be provided from the server apparatus 200 or other various external apparatuses.

According to FIG. 38, the data processor 140 of the apparatus for reproducing recording medium 100 processes the first data detected from the recording medium 10, and generates a main movie plane, that is, a main image 3810. In addition, the apparatus for reproducing recording medium 100 uses information received from the server apparatus or other sources to generate presentation plane 3820 or interactive plane 3830 etc. On the presentation plane 3820, various notice information 3821 may be displayed, and on the interactive plane 3820, various menus or buttons 3831, 3832 selectable by the user may be displayed.

The data processor 140 adds generated planes 3810, 3820, 3830 and generates an output screen 3840. Accordingly, notice information 3821 and button 3831, 3832 etc. combined with the main image 3830 are displayed. As such, an apparatus for reproducing recording medium 100 may provide a user interaction object unit.

In order to provide a user interaction object unit, there is needed identification information for differentiating the object unit and object additional information etc. which may interlock related information. Such information may be provided from the server apparatus.

As aforementioned, an apparatus for reproducing recording medium 100 may receive information such as depth map or disparity map from the server apparatus 200. Object identification information or object additional information may be provided in various methods according to exemplary embodiments.

According to an exemplary embodiment, such information may be provided in a metadata format separately from a depth map or disparity map etc. Such a method may be called a plural stream based method. Otherwise, object identification information or object additional information may be provided in the same file as the depth map or disparity map. Such a method may be called a single stream based method.

In a case of a plural stream based method, the object identification information may be meta data interlocked to the gray level of the depth map, meta data including coordinate information of the object, or meta data including contour information, and the object additional information may include URL etc. which is linked to the object identified by the object identification information.

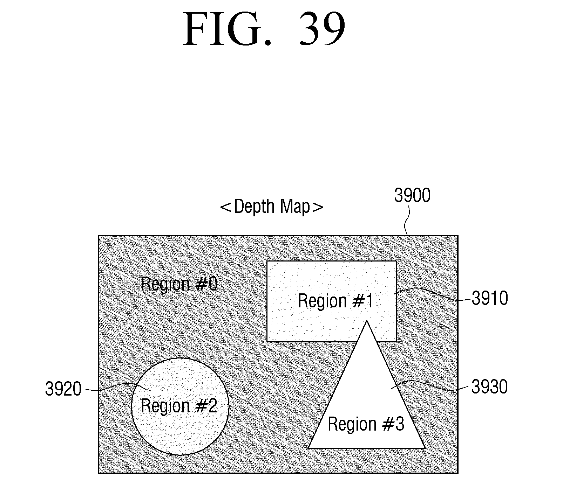

FIG. 39 is a view for explaining a method of differentiating a region where an object is displayed on a depth map. According to FIG. 39, each object in the depth map 3900 consists of three object regions (region #1, #2, #3) 3910, 3920, 3930, and background regions (region #0).

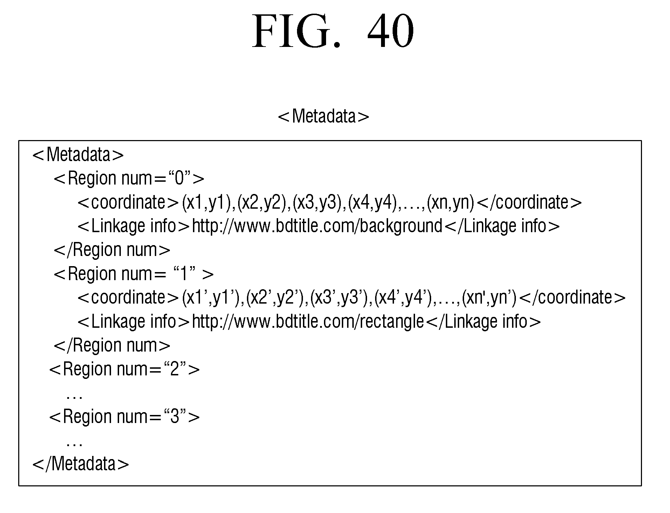

FIG. 40 illustrates an example of meta data where object identification information includes coordinate information. According to FIG. 40, meta data may be expressed in XML format. In the meta data, coordinate values ((x1, y1), (x2, y2), ...(xn, yn)) which may specify each region (region #0, #1, #2, #3), and URL information linked to each region may be included.

The controller 130 uses the communicator 120 to access the server apparatus corresponding to the URL information in the meta data. Accordingly, the controller receives object information from the server apparatus. Data processor 140 generates the objects according to the received object information on the designated regions in coordinate values. Accordingly, object information is received from the server apparatus. The data processor 140 generates the objects according to the received object information on designated regions in coordinate values. Accordingly, a composite screen including each object may be provided to the display apparatus. The user may touch the screen of the display apparatus and select an object. The display apparatus uses a touch sensor to sense a touch coordinate value on the screen and then transmits the sensed coordinate value to the apparatus for reproducing recording medium.

The controller 130 compares the touch coordinate value provided from the display apparatus with the coordinate value in the meta data, and determines whether or not to select an object. When it is determined that one object is selected, the controller 130 controls the communicator 120 to access the server apparatus corresponding to the URL that in turn corresponds to the object. Accordingly, it is possible to receive a feedback screen according to the object selection from the server apparatus. For example, when a menu for checking detailed information corresponding to the BD title is selected, the communicator 120 receives detailed information from the server apparatus, and the data processor 140 overlaps the received detailed information on the screen.

FIG. 40 illustrates meta data in a case of identifying an object using a coordinate value, but it is possible to provide the coordinate value of a contour of an object, that is, an edge portion, and identify the object. In this case, the controller 130 may recognize the internal region of the coordinate value disclosed in the meta data as one single object.

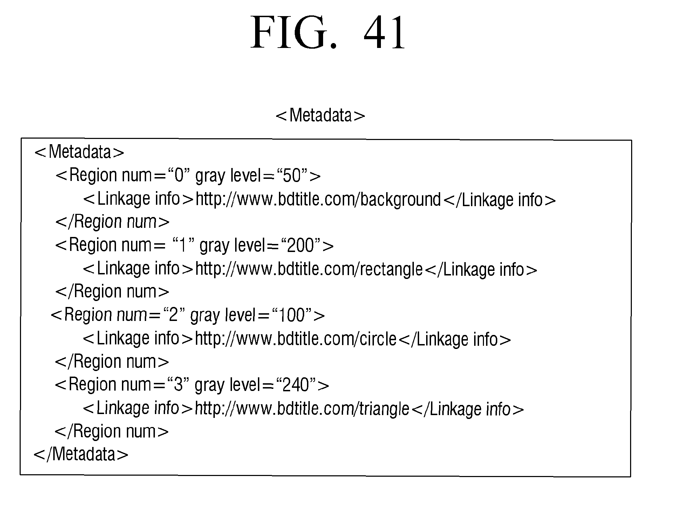

Alternatively, it is possible to interlock with a depth map and identify the object. In this case, it is possible to use a gray level of the depth map. FIG. 41 illustrates an example of a meta data identifying the object using the gray level of the depth map.

According to FIG. 41, meta data may be expressed in XML format. The depth map may be displayed in different gray levels per object. Accordingly, object additional information matching each gray level is included in the meta data. FIG. 41 illustrates URL information each matching each case of gray levels 50, 100, 200, 240.

As aforementioned, the controller 130 may use object additional information interlocked to the gray level of the depth map and provide user interaction of object unit.

Besides the above, it is possible to provide an object in a single stream based method as aforementioned.

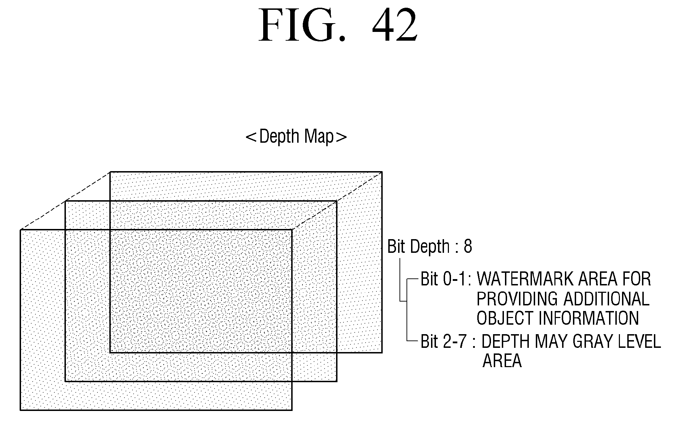

FIG. 42 is a view for explaining a single stream based method. According to FIG. 42, object additional information may be included in the depth map transmitted from the server apparatus 200 in watermark format. The server apparatus 200 may use a space region of an image or LSB of a frequency region to provide a watermark. FIG. 42 illustrates a case of using a lower LSB bit 0-1 watermark region of the space regions as a watermark region to provide URL information, and the remaining bit 2-7 having depth map information displayed in gray levels. As such, it is possible to use a portion of the depth map data to provide object additional information such as URL.

In order to provide such object identification information and object additional information etc., a configuration of a BD package may be changed.

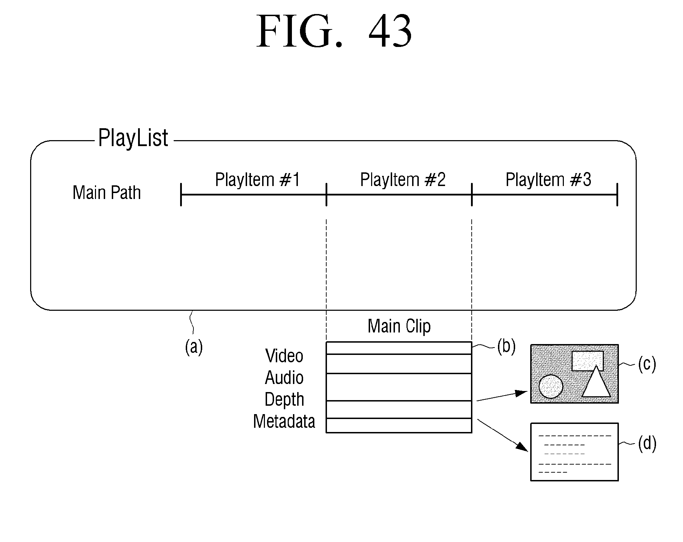

FIG. 43 illustrates a configuration of providing a depth map and meta data through a main path stream. (a) of FIG. 43 illustrates a main path stream inside a playlist. (b) of FIG. 43 illustrates a main clip information included in the play item in the main path stream. As illustrated in FIG. 43, in the play item in the main path stream, the depth map (c) and meta data (d) etc. may be provided together besides the basic video stream and audio stream in the main clip information.

Besides the above, it is possible to expand and define stream_entry(), stream_attribute() of STN_table in the play item, and provide the meta data.

In stream_entry(), the depth map and object meta data are provided as the main path, and thus may be defined as type=1. In the stream coding of stream_attribute(), the depth map may be defined as one of 0x02, 0x1 B, 0xEA, 0x20 as it has a general video property, and the object meta data may be newly defined using a reserved value.

Otherwise, it is possible to use the sub path stream together with the main path to provide the depth map and meta data.

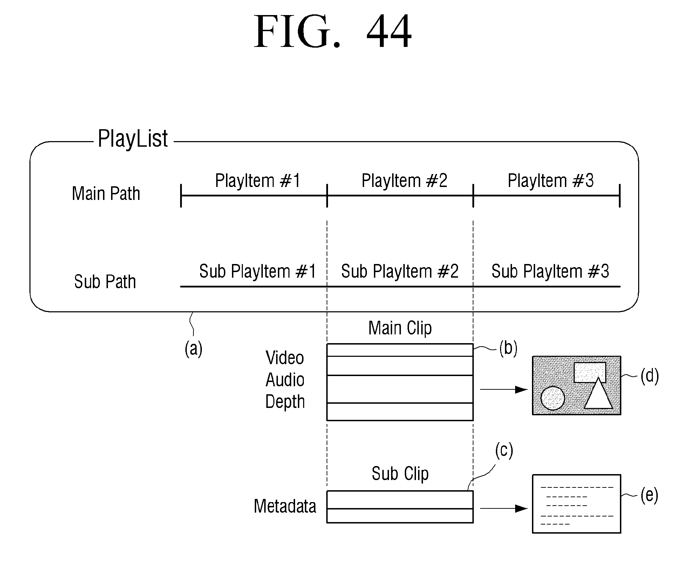

FIG. 44 illustrates a case of providing a depth map together with basic a video stream and audio stream through a main path stream, while also providing meta data information through a sub path stream. The configuration of FIG. 44 is just an example, thus information included in each stream may be configured in an opposite manner. (a) of FIG. 44 illustrates a configuration of a playlist. In a play item of the main path stream in the playlist, main clip information (b) is included, and in a play item of a sub stream, sub clip information (c) is included. In the main clip information (b), the depth map (d) is included together with the video stream and audio stream, and in the sub clip information (d), meta data (e) is included.

In order to provide one of the depth map or meta data as a sub path, it is possible to define a new subpath_type. For example, a new subpath_type for depth map may be define as 0x10 of the reserved values, and a new subpath_type for meta data may be define as 0x11 value of the reserved values.

In a case of transmitting the meta data using the sub path stream, it is possible to expand and define the stream_entry(), stream_attribute() of the STN_table inside the play item. For example, it is possible to define a type value of stream_entry() of the stream provided as the main path as 1, and define the type value of the stream provided as the sub path as 2, 3 or a new value. In addition, in the stream coding type of the stream_attribute(), it is possible to define the depth map as one of 0x02, 0x1B, 0xEA, 0x20, and newly define object meta data using the reserved value.

In addition, it is possible to define the new application type of clipinpo() regarding the depth map or meta data given through the sub path. For example, regarding the depth map provided through the sub path, it is possible to define the value of application_type as 10, and define the meta data as 11.

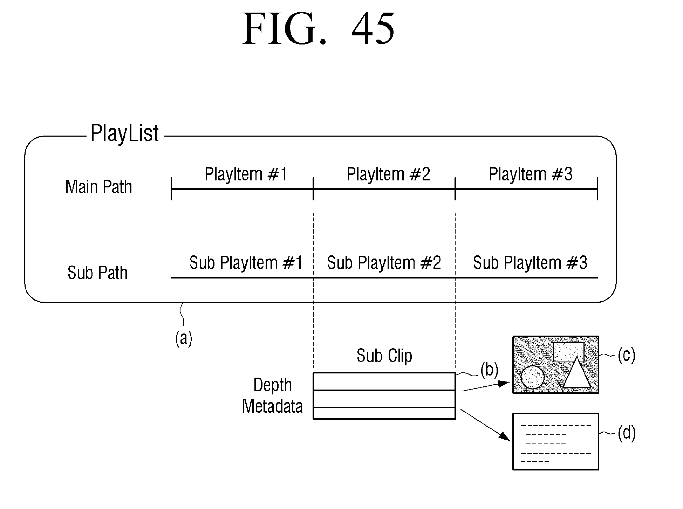

It may be possible to provide the depth map and meta data at the same time through the sub path stream. FIG. 45 illustrates a case of providing the depth map and meta data together using the sub path stream.
(a) of FIG. 45 illustrates a configuration of a playlist. Of these, in the sub clip information (b) included in the sub path stream, the depth map (c) and meta data (d) are included together. For the depth map and meta data to be provided together through the sub path stream, it may be possible to define a new subpath_type. For example, it is possible to newly define a new Subpath_type for the depth map as the reserved 0x10, and newly define a new Subpath_type for the meta data as the reserved 0x11 value.

In addition, in a case of transmitting the depth map and meta data together using the sub path stream, it is possible to expand and define the stream_entry(), stream_attribute() of the STN_table inside the play item. For example, the type value of the stream provided as sub path may be defined as 2, 3 or a new value. In addition, in the stream coding type of stream_attribute(), the depth map may be defined as one of 0x02, 0x1B, 0xEA, 0x20, and the object meta data may be newly defined using the reserved value. In addition, regarding the depth map and meta data given through the sub path, it is possible to define a new application type of clipinpo(). For example, regarding the depth map provided through the sub path, it is possible to define the value of application_type as 10, and define the meta data as 11.

A common property for providing the depth map and meta data may also be defined. That is, for a user interaction of object unit using the meta data, UO_mark_table(User Operation mark table) may be expanded and defined. That is, for a user interaction of object unit using the depth map and meta data, UO_mark_table(User Operation mark table) may be expanded and defined. More specifically, it is possible to define object_selection_mark in the reserved area of the UO_mark_table. UO_mark_table may be defined in AppInfoPlayList() or Playltem() of xxxx.mpls.

An object must be synchronized with the video frame and displayed. For the synchronization, the depth map and meta data may have the same synchronization information of frame unit with video. PTS (Time Stamp) may be an example of synchronization information. Accordingly, an object identifiable through the depth map and meta data may be synchronized in frame unit with the video being provided.

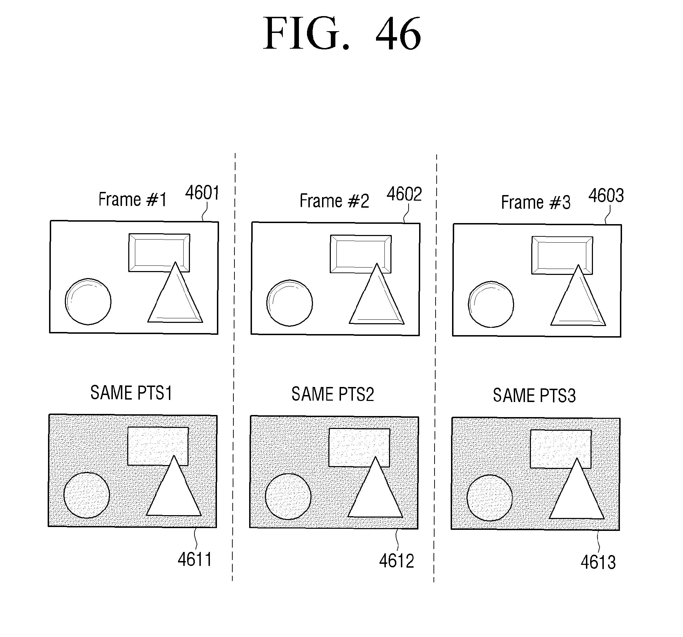

FIG. 46 illustrates a state where a video frame and a depth map is synchronized. According to FIG. 46, the data processor 140 uses the depth map 4611, 4612, 4603 and meta data having the same PTS as each #1, #2, #3(4601, 4602, 4603) to provide an identical object in frame unit.

As such, the controller 130 of the apparatus for reproducing recording medium may use various signaling information to check the meta data, and based on this, may provide a user interaction of object unit as aforementioned.

Accordingly, the controller 130 directly processes a user input of object unit and adds A/V output result of the recording medium regarding the user interaction, and transmits the result to the display apparatus.

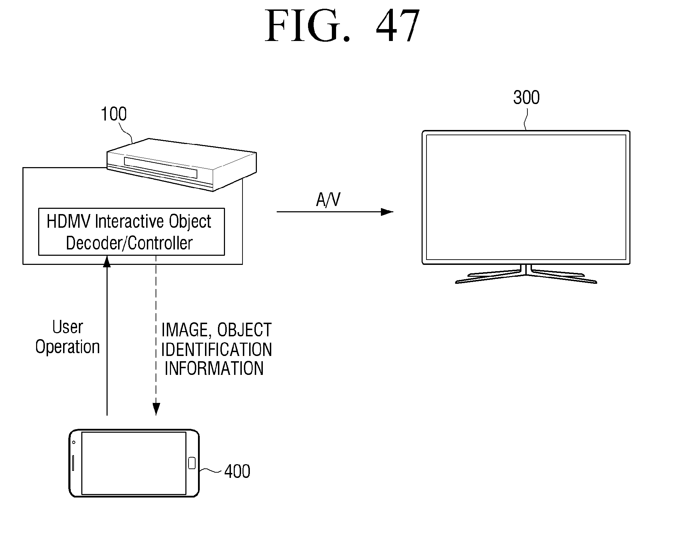

FIG. 47 is a view for explaining a process of the apparatus for reproducing apparatus transmitting a result according to the user interaction input through the mobile device to the display apparatus. According to FIG. 47, the apparatus for reproducing recording medium 100 provides the user interaction according to a user manipulation input through the mobile device 400. The mobile device 400 may be embodied as one of various types of devices such as a mobile phone, remote control, and tablet PC etc.

The controller 130 may transmit object identification information and object additional information and main image to the mobile device 400, or transmit the object generated by the object identification information and object additional information to the mobile device 400, the object overlapping the main image. The user may touch the screen of the mobile device 400 or manipulate the direction keys etc. to perform interaction such as selecting an object on the screen etc. The mobile device 400 may transmit the touch coordinate value of the user to the apparatus for reproducing recording medium 100, and the apparatus for reproducing recording medium 100 may use the object additional information corresponding to the touch coordinate value to provide feedback regarding the user interaction. The apparatus for reproducing recording medium 100 applies the feedback screen to the A/V stream and transmits the applied result to the display apparatus 300.

The apparatus for reproducing recording medium 100 may directly communicate with the mobile device 400 and receive a user interaction signal, but may also receive a user interaction signal through the display apparatus 200.

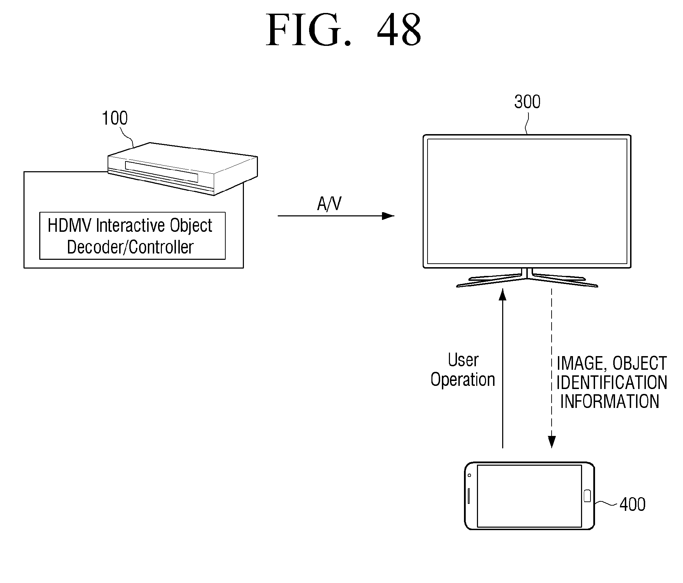

FIG. 48 illustrates performing a user interaction through the display apparatus 200. The controller 130 of the apparatus for reproducing recording medium 100 may transmit the object identification information and object additional information and AV data together to the display apparatus 200. The display apparatus 200 transmits the received data to the mobile device 400, and the mobile device 400 displays the received data on the screen. When a user interaction is made on the screen, the mobile device 400 provides the user interaction signal to the apparatus for reproducing recording medium through the display apparatus 300. As such, the user may use the mobile device 400 to change the screen of the display apparatus 200 or view various screens.

The apparatus for reproducing recording medium 100 may use HDMV interactive object decoder/controller module to process the user interaction.

In the present exemplary embodiment, the identification information and object additional information is provided together with the depth map in a plural file based and single file based method, but only the object identification information and object additional information may be provided separately from the depth map.

As such, according to various exemplary embodiments of the present disclosure, an apparatus for reproducing recording medium may combine data stored in the recording medium and data transmitted from the server apparatus to configure various screens. More specifically, the apparatus for reproducing recording medium may provide stereo images, multi-view images, PIP screens, user interaction objects etc. In addition, in each exemplary embodiment, it is possible to consider the network state and perform communication adaptively and receive data, enabling stable reproducing of content.

These operations of an apparatus for reproducing recording medium may be performed by a program stored in a non-transitory computer readable medium mounted on an apparatus for reproducing recording medium.

A non-transitory computer readable medium refers to medium where data may be stored not just for a short period of time such as register, cache, and memory etc., but semi-permanently, and where the data is readable by an apparatus. More specifically, the aforementioned various applications or programs may be stored and provided in a non-transitory readable medium such as a CD, DVD, hard disc, Blu-ray disc, USB, memory card, and ROM etc.

More specifically, a program may be stored in a non-transitory readable medium, the program performing content reproduction by sequentially performing a step of detecting first data from a recording medium where the first data is recorded, a communicating step of performing network adaptive communication with the server apparatus to receive second data, a step of combining the first data and second data and generating a virtual data package according to a manifest file for data binding, a reproducing step of reproducing content based on the virtual data package, and a step of outputting the reproduced content to an external apparatus. Otherwise, a program may be stored in a non-transitory readable medium, the program performing content reproduction by sequentially performing a step of detecting first data from a recording medium where the first data is recorded, a communicating step of receiving second data from a server apparatus, a step of using the first data to generate a main image screen, a step of using the second data to generate at least one PIP(Picture In Picture) object, a step of overlapping at least one PIP object in the main image screen to configure a screen, and a step of outputting the configured screen to the external apparatus.

Otherwise, a program may be stored in a non-transitory readable medium, the program performing content reproduction by sequentially performing a step of detecting first data from a recording medium where the first data is recorded, a communicating step of receiving second data from a server apparatus, a step of using the first data to generate a main image screen, a step of using the second data to display a user interaction object in the main image screen, and a step of performing operations corresponding to the selected user interaction object when a user interaction object is selected.

Although a few embodiments of the present invention have been shown and described, it would be appreciated by those skilled in the art that changes may be made in this embodiment without departing from the principles and spirit of the invention, the scope of which is defined in the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An apparatus for reproducing a recording medium, the apparatus comprising:
a driver configured to load a recording medium in which first data is recorded;
a communicator configured to receive second data by performing network adaptive communication with a server apparatus;
a data storage configured to store the second data;
a memory configured to store a manifest file for data binding;
a controller configured to update a data package of the first data to a virtual data package,
using the manifest file;
a processor configured to connect the first data and the second data and reproduce the connected first data and second data using the virtual data package; and
an interface configured to output the reproduced first and second data to an external apparatus.

2. The apparatus according to claim 1,
wherein the controller is further configured to check an initial network bandwidth, select an asset item corresponding to the initial network bandwidth from among multi-configured asset items in the manifest file, and update the virtual data package based on database connection information recorded in the selected asset item.

3. The apparatus according to claim 1 or 2,
wherein the controller is further configured to check a network bandwidth in real time, download the second data according to information corresponding to the checked network bandwidth from among the multi-configured information in the manifest file, and connect the downloaded second data with the first data using the virtual data package and reproduces the result.

4. The apparatus according to anyone of claim 1 to 3,
wherein the controller is further configured to check a network bandwidth in real time, and update the virtual data package according to the network bandwidth.

5. The apparatus according to claim 4,
wherein the controller is further configured to select an asset item corresponding to the checked network bandwidth from among the multi-configured asset items in the manifest file, and update the virtual data package in real time, based on database connection information recorded in the selected asset item.

6. The apparatus according to anyone of claim 1 to 5, wherein the first data comprises a left eye image and a right eye image,
the second data comprises at least one of a depth map and a disparity map,
the data processor uses the second data, and the first data to generate a multi-view image, and
the interface transmits the generated multi-view image to the external apparatus.

7. The apparatus according to anyone of claim 1 to 6, wherein the first data comprises main image data,
the second data comprises sub image data, and
the data processor uses the main image data and sub image data to express at least one sub image in a main image.

8. The apparatus according to anyone of claim 1 to 7, wherein the first data comprises image data,
wherein the second data comprises object identification information for defining an object position and object additional information interlocked to the object position, and
the data processor uses the image data, object identification information, and object additional information to express a user interaction object in an image.

9. A method for reproducing a recording medium, the method comprising:
detecting first data recorded on a recording medium;
receiving second data by performing network adaptive communication with a server apparatus;
updating a data package of the first data to a virtual data package using a manifest file for data binding;
connecting the first data and the second data and reproducing the connected first data and
second data using the virtual data package; and
outputting the reproduced first and second data to an external apparatus.

10. The method according to claim 9, wherein the updating comprises:
detecting an initial network bandwidth;
selecting an asset item corresponding to the initial network bandwidth from among asset items multi-configured in the manifest file; and
updating the data package into the virtual data package based on database connection information recorded in the selected asset item.

11. The method according to claim 9 or 10, wherein the network adaptive communication comprises:
detecting a network bandwidth in real time; and
downloading the second data according to information corresponding to the detected network bandwidth from among the multi-configured information in the manifest file.

12. The method according to anyone of claim 9 to 11, further comprising:
detecting a network bandwidth in real time, and updating the virtual data package according to the detected network bandwidth.

13. The method according to anyone of claim 9 to 12, further comprising:
detecting a network bandwidth in real time;
selecting an asset item corresponding to the detected network bandwidth, from among the multi-configured asset items in the manifest file; and
updating the virtual data package in real time based on database connection information recorded in the selected asset item.

14. The method according to anyone of claim 9 to 13, wherein the first data comprises a left eye image and a right eye image,
the second data comprises at least one of a depth map and a disparity map, and
the reproducing further comprises: using the second data, and the left eye image and the right eye image to generate a multi-view image.

15. The method according to anyone of claim 9 to 14, wherein the first data comprises main image data,
the second data comprises sub image data, and
the reproducing further comprises using the main image data and the sub image data to add at least one sub image to the main image.
